# EUROPEAN PATENT SPECIFICATION

(11) **EP 4 303 788 B1**
(45) Date of publication and mention of the grant of the patent: **14.08.2024**
(21) Application number: 22183650.5
(22) Date of filing: 07.07.2022
(51) Int. Cl.: G06Q 10/06

(54) **A METHOD FOR TRACKING INVENTORY AT A WORK SITE**
VERFAHREN ZUR BESTANDSVERFOLGUNG AUF EINER BAUSTELLE
PROCÉDÉ DE SUIVI D'INVENTAIRE SUR UN SITE DE TRAVAIL

(43) Date of publication of application: 10.01.2024
(73) Proprietor: Volvo Autonomous Solutions AB, 405 08 Göteborg (SE)
(72) Inventor: SANDBLOM, Fredrik, 431 66 Mölndal (SE); JAEGER, Nils, 436 58 Hovås (SE); DELGROSSI, Luca, Sunnyvale, 94087 (US)
(74) Representative: Valea AB

(56) References cited:
- US-A1- 2019 347 614
- US-A1- 2021 070 440
- US-B2- 9 952 056

## Description

### TECHNICAL FIELD

The invention relates to a method for tracking inventory at a work site. In particular when the inventory is tracked in a plurality of storage locatAions.

The invention may be applied by any unit suitable for tracking inventory, for example in a monitoring unit in connection with at least one transporting vehicle used for transporting inventory to, from, or between storage locations at the work site.

### BACKGROUND

Measuring inventory such as production volumes is of great importance to any work site which depends on how much inventory is stored. Based on how much inventory or space is available it is possible to plan available vehicles and/or productions accordingly. Typically, inventory is tracked manually by an operator estimating different parts of the inventory. At a worksite including autonomous vehicles, such manual estimation may also cause safety concerns for the operator performing the estimations. Further, it is difficult to perform estimations due to factors such as complex environments and/or large distances between storage locations.

Inventory estimations are time-consuming and prone to human errors. Furthermore, when humans perform these estimations, there are likely to be a lot of variation in quality and time consumption of the estimations.

Hence, there is an ongoing strive to estimate inventory of a work site in a more efficient manner.

US2021070440 proposes a method for monitoring a state of an aircraft by means of a camera to monitor different portions of the aircraft, and it further discloses a logistics system associated with the aircraft which can track inventory levels in a distribution center. T

US2019347614 proposes a system for assisting an autonomous vehicle in a distribution chain, the system being arranged to dynamically optimize a transit operation by determining which assets the autonomous vehicle shall pick up and or deliver and which assets can be combined in one transit operation for improved efficiency.

### SUMMARY

An object of the invention is to improve efficiency and/or accuracy of tracking inventory.

According to a first aspect, the object is achieved by a method according to claim 1. Hence, there is provided a method performed by a monitoring unit for tracking inventory at a work site. The inventory is stored in a plurality of storage locations. The method comprises:
- receiving at least one first measurement result of the inventory from at least one transporting vehicle, which at least one first measurement result is indicative of at least part of the inventory transported to, from, and/or between the plurality of storage locations in the work site, said at least one first measurement result being measured by an on-board sensor of the at least one transporting vehicle, and wherein said at least one first measurement result comprises at least one volume measurement result, and/or at least one weight measurement result, and
- estimating an amount of the inventory based on the received at least one first measurement result.

Since the at least one first measurement result is indicative of at least part of the inventory transported to, from, and/or between the plurality of storage locations, it is enabled to more accurately track how inventory is transported in the work site and/or also where within the plurality of storage locations inventory is presently located. As the at least one first measurement result is performed by the at least one transporting vehicle, accurate real-time estimations of amount of inventory is enabled.

Since the at least one first measurement results is being measured by an on-board sensor of the transporting vehicle, it is ensured that estimations of inventory in the work site is at least partly based on what is actually transported by the at least one transporting vehicle.

Furthermore, as the at least one measurement comprises at least one volume measurement result, and/or at least one weight measurement result, the estimation of the amount of inventory can be more flexibly performed as it can be based on either or both of weight and volume measurement. Knowing the weight of the inventory, the volume can be estimated and vice versa.

Optionally, receiving the at least one first measurement result comprises receiving a plurality of measurement results measured by the same transporting vehicle of the at least one transporting vehicle, which plurality of measurement results are measured for different transports of at least part of the inventory, to, from, and/or between the plurality of storage locations in the work site.

In this way, multiple measurements of transported inventory is obtained, and thereby a more accurate estimation of inventory is enabled.

Optionally, receiving the at least one first measurement result comprises receiving a measurement result for each part of the inventory transported by the at least one transporting vehicle, to, from, and/or between the plurality of storage locations in the work site. In this way, all measurements of transported inventory is obtained, and thereby it is possible to get a more accurate estimation of inventory.

Optionally, estimating the amount of the inventory comprises estimating a volume, a weight, and/or a density of the inventory.

In this way, it is possible to flexibly estimate the amount of inventory in any one or more of the above-mentioned units depending on which is more suitable for tracking the inventory in the work site.

Optionally, estimating the amount of the inventory comprises estimating a volume and/or a density of the inventory, wherein the at least one first measurement result comprises at least one weight measurement.

In this way, the inventory is enabled to be estimated based at least partly by weighing the inventory transported to, from, or between the plurality of storage locations in the work site.

Optionally, estimating the amount of the inventory comprises estimating a total amount of the inventory in the work site and/or an amount of the inventory in each storage location out of the plurality of storage locations.

In this way, it is possible to accurately and in real-time, estimate how much inventory is in each storage location and/or in the work site.

Optionally, estimating the amount of the inventory comprises predicting a future amount of the inventory.

In this way, it is possible to predict the future amount of the inventory in an accurate manner. For example, the at least one first measurement results, optionally in combination with at least one previous measurement, may be used to extrapolate to a future amount of inventory.

Optionally, the method further comprises:
- obtaining an initial amount of the inventory in the work site,
- wherein estimating the amount of the inventory is further based on the obtained initial amount of the inventory.

In this way, a more accurate estimation of the amount of inventory is achieved. This is since the inventory can be based on the known initial amount. This further means that the estimated amount of the inventory can be incremental with respect to the initial amount. In other words, estimating the amount of the inventory may comprise estimating how the amount of inventory changes with respect to the initial amount.

Optionally, obtaining the initial amount of the inventory comprises any one or more out of:
- obtaining at least one previous measurement of transported at least parts of the inventory to, from, or between the plurality of storage locations in the work site, and
- obtaining a previously estimated or determined amount of the inventory in the work site.

Optionally, receiving the at least one first measurement result of the inventory, further comprises receiving at least one type of the measured at least part of the inventory, and/or at least one tag and/or characteristics of the measured at least part of the inventory, and
wherein estimating the amount of the inventory further comprises estimating an amount of the at least one type and/or an amount of the at least one tag and/or characteristics of the inventory.

In this way, it is enabled to gain knowledge about the at least one tag and/or characteristics and/or the at least one type of inventory transported to, from, or between the plurality of storage locations in the work site. The at least one type and/or the at least one tag and/or characteristics may be tracked throughout every transport, which thereby allows for real-time knowledge of the tag and/or characteristics and type of inventory at the work site

Optionally, the method further comprises receiving at least one second measurement result of the inventory, which at least one second measurement result of the inventory is indicative of at least part of the inventory stored in the at least one of the plurality of storage locations, and estimating the amount of the inventory based on the received at least one second measurement result.

In this way, accuracy of estimating the amount of inventory at the work site is improved. This is since the estimation may be based on both inventory transported to, from, or between the plurality of storage locations in the work site, as well as measurements of inventory which is stored in the plurality of storage locations.

Optionally, the at least one second measurement result comprises any one or more out of:
- at least one volume measurement result and/or at least one measured shape of the at least one of the plurality of storage locations,
- at least one measurement result measured by at least one aerial vehicle, and
- at least one measurement result measured by the at least one transporting vehicle.

In other words, the at least one second measurement result may be measured in one or more different manners which all improve accuracy and efficiency of estimating the amount of inventory at the work site.

Optionally, the at least one second measurement result is measured by the at least one transporting vehicle, when the at least one transporting vehicle is concurrently transporting other parts of the inventory to, from, and/or between the plurality of storage locations in the work site.

In this way, the at least one transporting vehicle may measure its own transported inventory as well as inventory stored at the work site and thereby improving accuracy and efficiency of estimating the amount of inventory at the work site.

Optionally, the at least one second measurement result comprises at least one measurement result measured by at least one second sensor of the at least one transporting vehicle and/or at least one shape measurement result indicative of a driving path of the at least one transporting vehicle around the at least one of the plurality of storage locations.

In this way, a more efficient and/or accurate estimation of the amount of inventory at the work site is achieved. This is since the at least one transporting vehicle is enabled to perform the most suitable measurement(s) for the at least one second measurement results.

Optionally, receiving the at least one first measurement result comprises receiving at least one registration of at least part of the inventory which has left the work site, wherein the at least one registration comprises any one or more out of:
- at least one indication of which transporting vehicle has transported the at least part of the inventory off the work site,
- at least one indication of a time when the at least part of the inventory was transported off the work site,
- at least one indication of a type, characteristics, and/or a tag of the at least part of the inventory transported off the work site,
- a latest measurement result indicative of any one or more out of: weight, volume, type, characteristics, a tag and/or density, of the at least part of the inventory that has been transported off the work site as measured by a transporting vehicle,
- a confirmation of any one or more out of: weight, volume, type, characteristics, a tag and/or density, of the at least part of the inventory that has been transported off the work site as confirmed by an external verifying unit and/or user outside the work site.

In this way, a more efficient and/or accurate estimation of the amount of inventory at the work site is achieved. This is since it is possible to more accurately determine which inventory has left the work site, which further improves estimations of amount of inventory present in the work site.

Optionally, the method further comprises verifying the estimated amount of the inventory by comparing the estimated amount of the inventory to at least one expected amount and/or by comparing the at least one first measurement result with at least one control measurement result, and when the estimated amount of the inventory cannot be verified, the method further comprises triggering an alert.

In this way, a more accurate estimation of the amount of inventory at the work site is achieved. This is since when triggering the alert when the estimated amount of the inventory may not be correct, it is possible to perform suitable correcting actions, e.g. a manual recount.

Optionally, verifying the estimated amount of the inventory is based on comparing the estimated amount of the inventory with at least one expected amount of the inventory. In this way, it can be detected that the amount of inventory at the work site may be wrong if the estimated amount of the inventory does not match the expected amount of inventory such as a predicted amount.

Optionally, verifying the estimated amount of the inventory comprises:
- obtaining at least one previous measurement result of the inventory as measured when transported to, from, or between the plurality of storage locations in the work site,
- based on the at least one previous measurement result, predicting a first expected amount of the inventory, and
- comparing the estimated amount of the inventory with the first expected amount of the inventory.

Optionally, verifying the estimated amount of the inventory comprises:
- obtaining accumulated measurements of the inventory leaving and entering the work site,
- obtaining a previously estimated or determined amount of the inventory in the work site,
- predicting a second expected amount of the inventory based on the accumulated measurements and the previously estimated or determined amount of the inventory in the work site, and
- comparing the estimated amount of the inventory with the second expected amount of the inventory.

Optionally, verifying the estimated amount of the inventory is triggered to be performed by any one or more out of:
- periodically,
- when at least one transporting vehicle finishes a transport of at least part of the inventory, and
- when an amount of the inventory stored at any one or more of the plurality of storage locations is determined to be above a predetermined threshold.

Optionally, the method further comprises:
- training a machine learning model to predict the estimated amount of the inventory using the at least one first measurement result of the inventory, the estimated amount of the inventory, and using the knowledge of whether or not the estimated amount of the inventory was correctly verified, and
- using the trained machine learning model for predicting future estimations of the amount of the inventory and/or for verifying future estimations of the amount of the inventory.

In this way, the machine learning model can be used for a more accurate and/or efficient estimation of amount of inventory is achieved. This is since the machine learning model may quicker and with fewer measurements give an accurate estimation of amount of inventory as it has been trained on previous measurements and may require less input.

Optionally, at least a part of the inventory is tagged with a respective identifier identifying an origin and/or the respective type of the inventory. In these embodiments, each transport of the tagged part of the inventory is logged with the respective identifier, receiving the at least one first measurement result indicative of the inventory comprises receiving the respective identifier, and verifying the estimated amount of the inventory comprises verifying whether the respective identifier is consistent with the logged transports of the at least part of the inventory.

In this way, a more accurate estimation of the amount of inventory at the work site is achieved. This is since tagging the inventory makes it possible to more efficiently log and trace inventory transported to, from, and/or between the plurality of storage locations in the work site, and thereby enabling to verify that the at least one measurements is consistent with the tagged inventory.

Optionally, the method further comprises transmitting to at least one transporting vehicle, an instruction indicating how the at least one transporting vehicle shall measure inventory in the work site and, wherein the instruction further indicates one or more storage locations of the plurality of storage locations the at least one transporting vehicle, shall measure while transporting the at least part of the inventory.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is an illustration of a work site according to embodiments herein.
Fig. 2 is a flowchart of a method according to embodiments herein.
Fig. 3 is a flowchart of a method according to embodiments herein.
Fig. 4 is an example scenario illustrating embodiments herein.
Figs. 5a-c are example scenarios illustrating embodiments herein.
Figs. 6a-c are example scenarios illustrating embodiments herein.
Fig. 7 is an illustration of a control unit according to embodiments herein.
Fig. 8 is an illustration of a control unit according to embodiments herein.

### DETAILED DESCRIPTION OF EXAMPLE EMBODIMENTS OF THE INVENTION

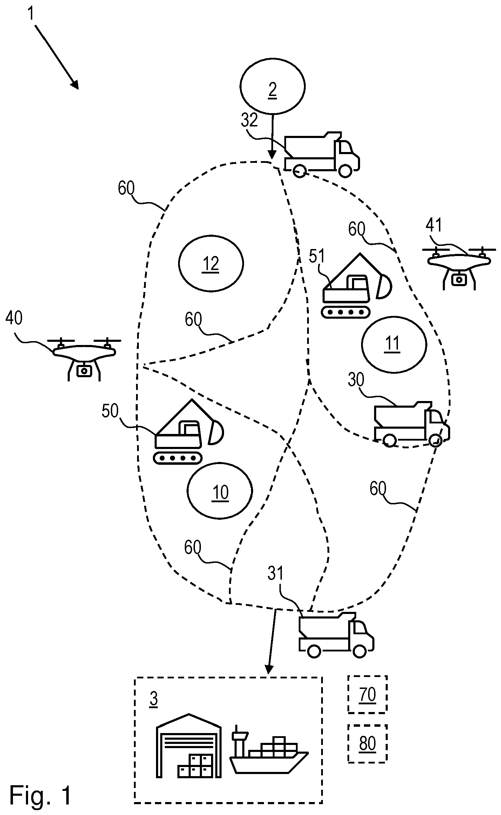

Fig. 1 illustrates a **work site 1** in accordance with embodiments herein. The work site 1 may be, or be part of any one or more areas wherein inventory needs to be tracked. The work site 1 may for example be part of a mining environment, construction site, quarry, warehouse, shipping location, etc. The work site 1 may be outdoors, indoors, above ground, underground, or any combination thereof. As a non-limiting example, the work site 1 may be a confined area which may include a use of construction equipment and/or transporting vehicles for transporting and/or processing material. The work site 1 may temporarily store inventory. The inventory may for example comprise one or more materials, e.g., raw materials, stones, rocks, minerals, metals, ores, processed materials, etc.

The inventory in the work site 1 may at least partly be imported from **at least one import location 2.** The at least one import location 2 may for example be part of where the inventory is produced, e.g. part of a mine wherein materials are gathered from a rock foundation. The at least one import location 2 may additionally or alternatively comprise any other suitable location(s) from which at least part of the inventory may be gathered/imported.

The inventory in the work site 1 may at least partly be exported to **at least one export location 3.** The at least one export location 3 may for example be part of where the inventory is exported, e.g., part of a shipping dock, a station where vehicles are ready to engage in long transportation, remote locations where the inventory are exported to, part of an airport, part of a warehouse, and/or a loading bay. The at least one export location 3 may additionally or alternatively comprise any other suitable location(s) to which at least part of the inventory may be exported.

**A plurality of storage locations 10, 11, 12** are arranged in the work site 1. The plurality of storage locations 10, 11, 12, may for example comprise any one or more out of **a first storage location 10, a second storage location 11,** and **a third storage location 12.** The plurality of storage locations 10, 11, 12 may be used for intermediate storage of at least part of the inventory in the work site 1. The plurality of storage locations 10, 11, 12 are arranged to store at least part of the inventory in the work site 1. The plurality of storage locations 10, 11, 12 may be at least partially dynamically or statically arranged at different positions in the work site 1. The plurality of storage locations 10, 11, 12 may be arranged at positions to reduce distance of travelling to/from at least one of the storage locations in the plurality of storage locations 10, 11, 12, and/or between the plurality of storage locations 10, 11, 12. The plurality of storage locations 10, 11, 12 may be arranged in piles with shapes simplifying estimation of volume, e.g. cone shapes and/or other geometries with commonly known formulas for estimating volume. When volume is estimated, weight and/or density may be estimated by further estimating and/or obtaining a type of the inventory in the storage location.

In the work site 1, **at least one transporting vehicle 30, 31, 32** operates. The at least one transporting vehicle 30, 31, 32 may be at least partly autonomous. The at least one transporting vehicle 30, 31, 32 may comprise any suitable transporting vehicle, e.g., one or more out of: a truck, a trailer, heavy-duty vehicles, construction equipment such as a dumper or dump truck etc. The at least one transporting vehicle 30, 31, 32 may or may not comprise a cabin for a user. The at least one transporting vehicle 30, 31, 32 may or may not have the user present in the vehicle. The at least one transporting vehicle 30, 31, 32, may for example comprise any one or more out of **a first transporting vehicle 30, a second transporting vehicle 31, and a third transporting vehicle 32.**

The at least one transporting vehicle 30, 31, 32 is arranged to transport at least part of the inventory in the work site 1, to, from, and/or between the plurality of storage locations 10, 11, 12 in the work site 1. For example, the at least one transporting vehicle 30, 31, 32 may be arranged to transport at least part of the inventory in the work site 1 between the plurality of storage locations 10, 11, 12. The at least one transporting vehicle 30, 31, 32 may additionally or alternatively be arranged to transport at least part of the inventory in the work site 1 from the at least one import location 2 to at least one of the plurality of storage locations 10, 11, 12. The at least one transporting vehicle 30, 31, 32 may additionally or alternatively be arranged to transport at least part of the inventory in the work site 1 to the at least one export location 3 from at least one of the plurality of storage locations 10, 11, 12.

The at least one transporting vehicle 30, 31, 32 is respectively arranged to comprise at least one first sensor for measuring on-board parameters. In other words, the at least one first sensor may be a respective on-board sensor. The at least one transporting vehicle 30, 31, 32 is arranged to use the respective at least one first sensor for measuring onboard parameters on the respective transporting vehicle 30, 31, 32. The respective at least one first sensor may comprise any one or more sensors suitable for measuring onboard parameters such as a scale and/or a camera. The respective at least one first sensor may for example be used by the respective at least one transporting vehicle 30, 31, 32 to perform at least one measurement of volume and/or weight of the at least part of inventory which is and/or will be transported by the respective at least one transporting vehicle 30, 31, 32. The at least one first sensor may respectively be mounted in any suitable location of the respective at least one transporting vehicle 30, 31, 32 for measuring the onboard parameters on the respective transporting vehicle 30, 31, 32. As one example, at least one respective container of the transporting vehicle 30, 31, 32 may be arranged with at least one respective scale as part of the at least one first sensor, e.g., for weighing inventory transported in the respective at least one container.

In some embodiments, the at least one transporting vehicle 30, 31, 32 may respectively be arranged with at least one second sensor e.g., respectively arranged for measuring an environment surrounding the at least one transporting vehicle 30, 31, 32. The respective at least one second sensor may comprise any suitable sensor for measuring and/or scanning environments such as any one or more out of a camera, Light Detection and Ranging (Lidar) sensor(s), Radio Detection and Ranging (Radar) sensor(s), etc. The respective at least one second sensor may be used by the at least one transporting vehicle 30, 31, 32 to measure at least part of inventory stored in at least one of the plurality of storage locations 10, 11, 12. This may be performed by scanning the at least one of the plurality of storage locations 10, 11, 12 and estimating any one or more out of weight, volume and density. The at least one second sensor may respectively be mounted in any suitable location of the respective at least one transporting vehicle 30, 31, 32 for measuring/scanning a surrounding of the respective transporting vehicle, e.g., on a roof top, inside a cabin directed out, on a side of the at least one transporting vehicle 30, 31, 32, etc.

Since the at least one transporting vehicle 30, 31, 32 may comprise different types of sensors, e.g., the at least one first sensor and the at least one second sensor for performing different measurements, it may be possible for the at least one transporting vehicle 30, 31, 32 to measure at least part of the inventory at the work site 1 which is transported by the at least one transporting vehicle 30, 31, 32, e.g. when loading and/or unloading the at least part of inventory, and to measure the at least part of inventory in the work site 1 stored in the at least one of the plurality of storage locations 10, 11, 12 when driving past and/or around the at least one of the plurality of storage locations 10, 11, 12. In other words, the at least one transporting vehicle 30, 31, 32 may be able to measure transported inventory and concurrently while transporting inventory, measure inventory stored in the plurality of storage locations 10, 11, 12.

In the work site 1, **at least one aerial vehicle 40, 41** may operate. The at least one aerial vehicle 40, 41 may for example be a drone or any other suitable unmanned aerial vehicle. The at least one aerial vehicle 40, 41 may be at least partly autonomous. The at least one aerial vehicle 40, 41, may for example comprise **a first aerial vehicle 40** and/or **a second aerial vehicle 41.** The at least one aerial vehicle 40, 41 may be arranged to measure at least part of inventory in the work site 1, e.g. as a complement to the measurements performed by the at least one transporting vehicle 30, 31, 32. The at least one aerial vehicle 40, 41 may for example measure the at least part of inventory stored in at least one of the plurality of storage locations 10, 11, 12, e.g. at least partially by use of a camera. The at least one aerial vehicle 40, 41 may for example measure the at least part of inventory stored in at least one of the plurality of storage locations 10, 11, 12, by circulating and scanning around the at least one of the plurality of storage locations 10, 11, 12, and/or by measuring from above the at least one of the plurality of storage locations 10, 11, 12. In this way, a three-dimensional (3D) model, e.g. a volume measurement, may efficiently be estimated.

In the work site 1, **at least one construction equipment 50, 51** may operate. The at least one construction equipment 50, 51, may for example comprise **a first construction equipment 50** and/or **a second construction equipment 51.** The at least one construction equipment 50, 51 may comprise loading equipment which may be arranged to load and/or unload inventory onto/from the at least one transporting vehicle 30, 31, 32, e.g., to/from the at least one of the plurality of storage locations 10, 11, 12. The at least one construction equipment 50, 51 may additionally or alternatively comprise machines and/or vehicles performing operations in the work site, e.g., any one or more out of:
- a crusher for crushing at least part of the inventory, e.g. crushing rocks into smaller pieces,
- mining equipment,
- material processing equipment,
- drilling equipment for drilling in the work site 1,
- maintenance equipment, e.g. for maintaining roads and/or paths in the work site 1.

The at least one construction equipment 50, 51 may or may not be autonomous. When being autonomous, the at least one construction equipment 50, 51 may or may not comprise a cabin for a user. The at least one construction equipment 50, 51 may or may not have the user present in the vehicle.

**A set of paths 60** may be present in the work site 1. The set of paths 60 may comprise paths traversable by vehicles in the work site 1, e.g., the at least one transporting vehicle 30, 31, 32 and/or the aerial vehicle 40, 41. As an example, the at least one transporting vehicle 30, 31, 32, may be respectively configured with a respective route indicating how to drive on a respective subset of paths out of the set of paths 60, e.g. as a repeatable/repeating route in the work site 1. The respective route may be, or be part of, a respective drive plan and/or a respective mission for the respective at least one transporting vehicle 30, 31, 32. The respective at least one transporting vehicle 30, 31, 32 may also in some embodiments deviate from the route and/or be configured to drive in any other suitable manner. When the at least one transporting vehicle 30, 31, 32 comprises multiple vehicles, the vehicles may be configured to drive on different routes in the work site 1 to efficiently be able to perform transports in a larger area of the work site 1 in reduced time. The respective route, drive plan and/or mission for the respective at least one transporting vehicle 30, 31, 32 may comprise driving in the work site, e.g. on the respective subset of paths, and performing any one or more out of:
gathering inventory from the at least one import location 2 by transporting said inventory from the at least one import location 2 to at least one of the plurality of storage locations 10, 11, 12, i.e. bringing in new inventory into the work site 1,
transporting at least part of the inventory in the work site 1 between at least two out of the plurality of storage locations 10, 11, 12, and
exporting inventory to the at least one export location 3 by transporting said inventory to the at least one export location 3 from at least one of the plurality of storage locations 10, 11, 12, i.e. at least part of the inventory leaves the work site 1.

In some embodiments, the respective routes, e.g. as part of the set of paths 60, may be planned such that all, or a majority of relevant areas of the plurality of storage locations 10, 11, 12 are covered meaning that the at least one transporting vehicle 30, 31, 32 drives to and measures a plurality, all, or a majority of the storage locations 10, 11, 12 over time, e.g. to continuously update volume measurements. The at least one aerial vehicles 40, 41 may be used to complement the measurements, e.g. on different schedule such as with less frequent measurements. The shapes of the stored inventory in the plurality of storage locations 10, 11, 12 may be selected such that transportation to the plurality of storage locations 10, 11, 12 either provide swift access at the expense of taking more space, or to be stored densely but with less accessibility. The shapes may additionally or alternatively be selected based on the possible routes for the at least one transporting vehicle 30, 31, 32, such that the routes may provide as many measurements of the plurality of storage locations 10, 11, 12 as possible. In other words, arranging positioning and/or shape of the plurality of storage locations 10, 11, 12 and planning the respective routes of the at least one transporting vehicle 30, 31, 32 may be performed by assessing how to provide accurate measurements and dense storage, e.g. as a joint optimization problem.

Embodiments herein may be performed at least partially by a **monitoring unit 70.** The monitoring unit 70 may be an electronic control unit. The monitoring unit 70 may be comprised in any suitable location, e.g. in or remote to the work site 1. As an example, the monitoring unit 70 is comprised in a server and/or a control station. The monitoring unit 70 may be communicatively coupled with the vehicles and/or their respective control/communication units in the work site 1, e.g. the at least one transporting vehicle 30, 31, 32 and/or the at least one aerial vehicle 40, 41. Some of the embodiments herein may be performed at least partially by **at least one control unit 80,** e.g. for controlling the embodiments in the at least one transporting vehicle 30, 31, 32. The at least one control unit 80 may be comprised in any suitable location, e.g. comprised in the at least one transporting vehicle 30, 31, 32 and/or at a remote location. The at least one control unit 80 may be communicatively coupled with the at least one transporting vehicle 30, 31, 32. The monitoring unit 70 and the at least one control unit 80 may be co-located or located in separate locations.

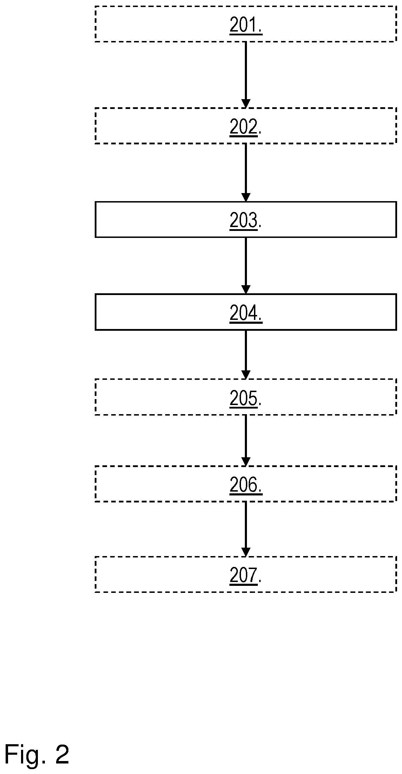

Fig. 2 illustrates a method for tracking inventory at the work site 1. The inventory is stored in the plurality of storage locations 10, 11, 12. The method may be performed by the monitoring unit 70. The method comprises the following actions described below, which actions may be taken in any suitable order. Optional actions are indicated by dashed boxes in Fig. 2.

In some embodiments herein, at least a part of the inventory is tagged with a respective identifier identifying an origin and/or the respective type of the inventory. In these embodiments each transport of the tagged part of the inventory is logged, e.g. in a database, with the respective identifier. Logging each transport of the tagged part of the inventory may further comprise logging time of the transportation, which transporting vehicle is performing the transport, and/or any other suitable parameter. The tagging of the inventory as used herein may mean a virtual tagging for keeping track of which inventory is part of which one of the plurality of storage locations 10, 11, 12.

### Action 201

In some embodiments, the method comprises obtaining an initial amount of the inventory in the work site. Thereby it may be possible to estimate an amount of inventory in the work site based on increments and/or differences from the initial amount, e.g. by comparing the initial amount and how much is brought into and/or transported from the work site 1, e.g., to/from the at least one import location 2 and/or the at least one export location 3.

In some embodiments, obtaining the initial amount of inventory may comprise any one or more out of:
- obtaining at least one previous measurement of transported at least parts of the inventory to, from, or between the plurality of storage locations 10, 11, 12 in the work site 1, and
- obtaining a previously estimated or determined amount of the inventory in the work site 1.

### Action 202

In some embodiments, the method comprises transmitting to at least one transporting vehicle 30, 31, 32, an instruction indicating how the at least one transporting vehicle 30, 31, 32 shall measure inventory in the work site 1. The instruction may further indicate one or more storage locations of the plurality of storage locations 10, 11, 12 that the at least one transporting vehicle 30, 31, 32, shall measure while transporting the at least part of the inventory. The instruction may include which sensors the at least one transporting vehicle 30, 31, 32 shall use for measuring at least part of inventory in the work site, e.g. use of the at least one first sensor and/or the at least one second sensor. When indicated to use the at least one second sensor, the at least one transporting vehicle 30, 31, 32 will respectively measure at least part of inventory when passing and/or driving around any one or more respective storage locations in the plurality of storage locations 10, 11, 12. The respective storage locations in the plurality of storage locations 10, 11, 12 may for example be measured by the respective at least one second sensor when a distance between the at least one second sensor and a storage location is less than a predetermined sensor capability threshold. In some of these embodiments, the instruction may further indicate how the at least one transporting vehicle 30, 31, 32 shall be routed in the work site 1 to be able to measure an increased number of storage locations than when travelling according to a normal drive plan. The at least one transporting vehicle 30, 31, 32 may be respectively routed to drive close to, past, and/or around one or more respective storage locations out of the plurality of storage locations 10, 11, 12.

### Action 203

The method comprises receiving at least one first measurement result of the inventory from at least one transporting vehicle 30, 31, 32. The at least one first measurement result is indicative of at least part of the inventory transported to, from, and/or between the plurality of storage locations 10, 11, 12 in the work site 1. Said at least one first measurement result is measured by an on-board sensor of the at least one transporting vehicle 30, 31, 32, e.g., the at least one first sensor. Said at least one first measurement result comprises at least one volume measurement result, and/or at least one weight measurement result. The at least one first measurement result by the on-board sensor, e.g., the at least one first sensor, may be performed when the at least one transporting vehicle 30, 31, 32 has completed a loading operation and/or before starting an unloading operation. The at least one first measurement result may be performed when the at least one transportation vehicle 30, 31, 32 is at a stand-still or when travelling below a speed threshold.

In some embodiments, receiving the at least one first measurement result comprises receiving a plurality of measurement results measured by the same transporting vehicle of the at least one transporting vehicle 30, 31, 32. In these embodiments, the plurality of measurement results are measured for different transports of at least part of the inventory, to, from, and/or between the plurality of storage locations 10, 11, 12 in the work site 1. In other words, the at least one first measurement result may comprise measurements of multiple transports of different inventory.

In some embodiments, receiving the at least one first measurement result comprises receiving a measurement result for each part of the inventory transported by the at least one transporting vehicle 30, 31, 32, to, from, and/or between the plurality of storage locations 10, 11, 12 in the work site 1. In other words, the at least one first measurement result may comprise multiple measurements of one or more different transported inventory, transported respectively at different times, by one or more different transporting vehicles out of the at least one transporting vehicle 30, 32, 32. In these embodiments, all transports of at least parts of inventory in the work site 1 may be measured at least once by the at least one transporting vehicle 30, 31, 32.

In some embodiments, receiving the at least one first measurement result of the inventory may further comprise receiving at least one type of the measured at least part of the inventory and/or at least one tag and/or characteristics of the measured at least part of the inventory. The at least one type may indicate what type of material is in the respective at least part of inventory, e.g. which metal(s), mineral(s), ore(s), rock(s), etc. The at least one characteristics may indicate any one or more out of: a quality of inventory, a grade, a material capability, material characteristics, a density, etc. The at least one tag may comprise an identifier, e.g., the respective identifier as described above.

In some embodiments, receiving the at least one first measurement result comprises receiving at least one registration of at least part of the inventory which has left the work site 1. In other words, at least part of the inventory which may have been exported to and/or via the at least one export location 3. The at least one registration may comprise any one or more out of:
- at least one indication of which transporting vehicle 30, 31, 32 has transported the at least part of the inventory off the work site 1, in this way if an error is detected in the amount of transported inventory to the at least one export location 3, it may be possible to track which transporting vehicle 30, 31, 32 may be responsible for the error,
- at least one indication of a time when the at least part of the inventory was transported off the work site 1, in this way it may be possible to more accurately track inventory in real-time,
- at least one indication of a type, a tag, and/or characteristics, e.g., quality, material characteristics, material capabilities, of the at least part of the inventory transported off the work site 1,
- a latest measurement result indicative of any one or more out of: weight, volume, type, a tag, characteristics, e.g., quality, material characteristics, material capabilities, and/or density, of the at least part of the inventory that has been transported off the work site 1 as measured by a transporting vehicle 30, 31, 32,
- a confirmation of any one or more out of: weight, volume, type, a tag, characteristics, e.g., quality, material characteristics, material capabilities, and/or density, of the at least part of the inventory that has been transported off the work site 1 as confirmed by an external verifying unit and/or user outside the work site 1.

In some of these embodiments, the characteristics may e.g., indicate any one or more out of: a quality of inventory, a grade, a material capability, material characteristics, a density, etc. The respective tags may respectively comprise an identifier, e.g., the respective identifier as described above.

In this way, a more efficient and/or accurate estimation of the amount of inventory at the work site is achieved. This is since it is possible to more accurately which inventory has left the work site, which further improves estimations of the amount of inventory present in the work site.

In some embodiments, the method further comprises receiving at least one second measurement result of the inventory. The at least one second measurement result of the inventory is indicative of at least part of the inventory stored in the at least one of the plurality of storage locations 10, 11, 12. In other words, while the at least one first measurement result indicates transported at least part of inventory, the second at least one measurement result indicates stored at least part of inventory.

The at least one second measurement result may comprise at least one measurement result measured by an environment measuring sensor, e.g., the at least one second sensor, of the at least one transporting vehicle 30, 31, 32 and/or at least one shape measurement result indicative of a driving path of the at least one transporting vehicle 30, 31, 32 around the at least one of the plurality of storage locations 10, 11, 12.

The at least one second measurement result may comprise at least one volume measurement result and/or at least one measured shape of the at least one of the plurality of storage locations 10, 11, 12.

As an example, the at least one transporting vehicle 30, 31, 32 may drive around at least one storage location out of the plurality of storage locations 10, 11, 12 to estimate a circumference and/or may scan the shape of the at least one storage location using its respective at least one second sensor.

Additionally or alternatively, the at least one second measurement result may comprise at least one measurement result measured by at least one aerial vehicle 40, 41. The at least one second measurement result may additionally or alternatively, comprise at least one measurement result measured by the at least one transporting vehicle 30, 31, 32. In other words, the at least one second measurement result may comprise measurements performed by multiple different vehicles, e.g. measured in different manner. The combined measurements may enable a high accuracy estimation of amount of inventory.

In some embodiments, any one or more out of the at least one second measurement result may comprise partial measurements of one or more out of the plurality of storage locations 10, 11, 12, e.g., which may be considered complete measurements when combining with other corresponding measurements in the at least one second measurement result and/or in the at least one first measurement result. For example, two different transporting vehicle of the at least one transporting vehicle 10, 11, 12 may measure inventory from separate views and/or sides of a particular storage location in the plurality of storage locations 10, 11, 12 where each partial measurement result may be used independently for estimating an amount of inventory in the particular storage location, but wherein the accuracy of the estimation is improved when separately measured views and/or sides are considered in the estimation. In other words, each storage location in the plurality of storage locations does not need to be measured in full by any one specific transporting vehicle of the at least one transporting vehicle 30, 31, 32, instead measurements of different coverage of the plurality of storage locations 10, 11, 12 may be merged over time to make up for a complete measurement.

In some embodiments, the at least one second measurement result is measured by the at least one transporting vehicle 30, 31, 32, when the at least one transporting vehicle 30, 31, 32 is concurrently transporting other parts of the inventory to, from, and/or between the plurality of storage locations 10, 11, 12 in the work site 1. In this way, the at least one transporting vehicle 30, 31, 32 may be used for two different measuring purposes while also transporting at least part of the inventory in the work site 1.

In some embodiments, receiving the at least one second measurement result of the inventory comprises receiving measurement results indicative of each of the plurality of storage locations 10, 11, 12. In other words, all of the plurality of storage locations 10, 11, 12 may be measured by the at least one transporting vehicle 30, 31, 32.

In some embodiments, receiving the at least one second measurement result of the inventory, comprises receiving, from the first transporting vehicle 30, measurement results of a first sub-set of the plurality of storage locations 10, 11, 12. In some of these embodiments, receiving the at least one second measurement result of the inventory, comprises receiving, from the second transporting vehicle 31, measurement results of a second sub-set of the plurality of storage locations 10, 11, 12. In other words, different transporting vehicles in the at least one transporting vehicle 30, 31, 32 may measure different storage locations.

In some embodiments, receiving the at least one first measurement and/or receiving the at least one second measurement may be performed continuously and/or in real-time, e.g. as a stream of measurements when they occur and/or when they are transmitted to the monitoring unit 70.

In some embodiments, receiving the at least one first measurement result and/or receiving the at least one second measurement result comprises receiving the respective identifier as tagged with the at least part of measured inventory, e.g., as described above.

### Action 204

The method comprises estimating an amount of the inventory based on the received at least one first measurement result.

Since the at least one first measurement result is indicative of at least part of the inventory transported to, from and/or between the plurality of storage locations 10, 11, 12, it is enabled to more accurately track how inventory is transported in the work site 1 and/or where at least part of inventory is located in the plurality of storage locations 10, 11, 12. As measurements are performed per transport, accurate real-time estimations of amount of inventory is enabled.

In some embodiments, estimating the amount of the inventory is further based on the received at least one second measurement result. In this way, accuracy of estimating the amount of inventory at the work site is improved. This is since the estimation may be based on inventory transported to, from, or between the plurality of storage locations 10, 11, 12 in the work site 1, as well as measurements of inventory which is stored in the plurality of storage locations 10, 11, 12.

In some embodiments, estimating the amount of the inventory comprises estimating a volume, a weight, and/or a density of the inventory. In other words, the unit estimated for the amount of the inventory may be flexible, and may be changed dynamically or may be fixed in a configuration.

In some embodiments, estimating the amount of the inventory comprises estimating a volume and/or a density of the inventory. In these embodiments, the at least one first measurement result comprises at least one weight measurement. The estimation may comprise converting the weight measurement to volume and/or density measurement.

In some embodiments, estimating the amount of the inventory comprises estimating a total amount of the inventory in the work site 1 and/or an amount of the inventory in each storage location out of the plurality of storage locations 10, 11, 12. In other words, the estimation as performed herein may relate to any one or both of detailed tracking of each storage location and/or of a total amount of inventory.

In some embodiments, estimating the amount of the inventory comprises predicting a future amount of the inventory. This may be performed by extrapolating from any one or more out of the at least one first measurement result, the at least one second measurement, and an initial amount of inventory e.g., as obtained in action 201. To predict the future amount of the inventory, timing information of when transporting the at least part of the inventory in the work site 1 to, from, or between the plurality of storage locations 10, 11, 12 may also be obtained and used in the prediction, e.g. such as to better predict time and/or quantity of the transported at least part of the inventory.

In some embodiments, estimating the amount of the inventory is based on the obtained initial amount of the inventory, e.g. as obtained in action 201.

In some embodiments, estimating the amount of the inventory comprises estimating an amount of the at least one type and/or an amount of the at least one tag and/or characteristics of the inventory. The characteristics may e.g., indicate any one or more out of: a quality of inventory, a grade, a material capability, material characteristics, a density, etc. The respective tags may respectively comprise an identifier, e.g., the respective identifier as described above. As one example, the estimation may comprise an estimate of how much inventory of a first type and/or a second type is/are available in total and/or in each of the plurality of storage locations 10, 11, 12. As another example, the estimation may comprise an estimate of how much inventory of a first characteristics and/or a second characteristics is/are available in total and/or in each of the plurality of storage locations 10, 11, 12. As yet another example, the estimation may comprise an estimate of how much inventory is/are available in total and/or in each of the plurality of storage locations 10, 11, 12 comprising the at least one tag. In this way it may be possible to track and identify characteristics, types, and/or specific tagged inventory in real time in the plurality of storage locations 10, 11, 12. As a more concrete example, it may be necessary to know which material is available in which storage locations, e.g. of certain type, characteristics, and/or which material needs to be exported. In this way, it is possible to plan the work site 1 accordingly in an efficient manner for high productivity.

### Action 205

The method may further comprise verifying the estimated amount of the inventory by comparing the estimated amount of the inventory to at least one expected amount and/or by comparing the at least one first measurement result with at least one control measurement result. The control measurement result may at least partially comprise the at least one second measurement result. The expected amount may for example be a predicted amount of inventory, e.g. predicted based on previous measurements, the at least one first measurement and/or the at least one second measurement.

When verifying the estimated amount of the inventory it may be possible to detect inconsistencies with respect to the at least one control measurement result and/or the at least one expected amount. In these situations, the inventory amount may be unknown which may cause productivity degradation and/or safety problems. This is since this may indicate that it is at least partly unknown where some inventory is located which thus may be in the way for the at least one transporting vehicle 30, 31, 32 and/or any of the plurality of storage locations 10, 11, 12 may incorrectly be estimated as full when empty or at least non-full and vice versa which may cause transporting operations of the at least one transporting vehicle 30, 31, 32 to be ineffective or not possible to perform.

In some embodiments, verifying the estimated amount of the inventory comprises:
- obtaining at least one previous measurement result of the inventory as measured when transported to, from, or between the plurality of storage locations 10, 11, 12 in the work site 1,
- based on the at least one previous measurement result, predicting a first expected amount of the inventory, e.g., using extrapolation, machine learning and/or any other suitable prediction technique, and
- comparing the estimated amount of the inventory with the first expected amount of the inventory.

In this way, it may be possible to determine whether or not the prediction matches the estimated amount of the inventory. If not, the estimation of the amount of inventory may be incorrect.

In some embodiments, verifying the estimated amount of the inventory comprises:
- obtaining accumulated measurements of the inventory leaving and entering the work site 1, e.g., using at least partly the above-mentioned received at least one registration of action 203 and/or transportations of inventory from the at least one import location 2,
- obtaining a previously estimated or determined amount of the inventory in the work site 1, e.g., as estimated as in embodiments herein, by manual inventory inspection, and/or by any other suitable method,
- predicting a second expected amount of the inventory based on the accumulated measurements and the previously estimated or determined amount of the inventory in the work site 1, and
- comparing the estimated amount of the inventory with the second expected amount of the inventory.

In this way, it may be possible to determine whether or not the estimated amount of the inventory is at least partly consistent with the accumulated measurements and the previously estimated or determined amount of the inventory. In other words, is the ingoing and outgoing flow of inventory in the work site 1 consistent with the estimated amount of the inventory. If not, the estimation of the amount of inventory may be incorrect.

In some embodiments, verifying the estimated amount of the inventory may be triggered to be performed by any one or more out of:
- periodically, e.g., once every hour and/or once every day, etc.,
- when at least one transporting vehicle 30, 31, 32 finishes a transport of at least part of the inventory, and
- when an amount of the inventory stored at any one or more of the plurality of storage locations 10, 11, 12 is determined to be above a predetermined threshold. The plurality of storage locations 10, 11, 12 may be determined to be above the predetermined threshold by measurement of the at least one transporting vehicle 30, 31, 32 and/or by an estimation made by the monitoring unit 70. The plurality of storage locations 10, 11, 12 may be determined to be above the predetermined threshold when a total amount of inventory is above a predetermined total amount threshold or when a particular storage location in the plurality of storage locations 10, 11, 12 is above a predetermined storage location threshold.

In some embodiments, verifying the estimated amount of the inventory comprises verifying whether the respective identifier, e.g. as received in action 203, is consistent with the logged transports of the at least part of the inventory.

### Action 206

The method may further comprise triggering an alert, e.g., when the estimated amount of the inventory, as in action 205, cannot be verified, i.e. when the estimated amount of inventory is indicated to be incorrect, e.g. by more than a threshold. The alert may trigger the at least one transport vehicle 30, 31, 32 to stop, e.g. as operations may not be performed correctly and/or may be unsafe as untracked inventory may exist in the work site. The inventory may then be determined by manual count and/or any other suitable method.

### Action 207

In some embodiments, the method comprises training a machine learning model to predict the estimated amount of the inventory using the at least one first measurement result of the inventory, the estimated amount of the inventory, and using the knowledge of whether or not the estimated amount of the inventory was correctly verified. Furthermore, the machine learning model may be trained using the at least one second measurement and/or the above-mentioned at least one registration.

The machine learning model may be used for predicting future estimations of the amount of the inventory and/or for verifying future estimations of the amount of the inventory. As an example, any of the estimations as used herein may be performed by the machine learning model when the machine learning model has received enough training, i.e. above a predefined number of measurements and respective verifications.

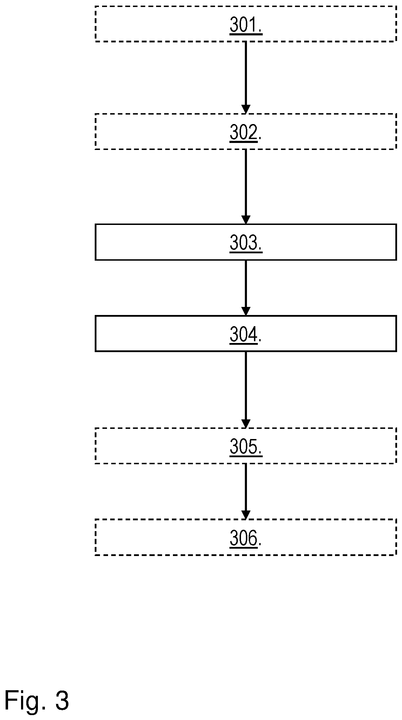

Fig. 3 illustrates a method performed by the first transporting vehicle 30 for assisting the monitoring unit 70 in tracking inventory at the work site 1. While the method is described for the first transporting vehicle 30, the same method applies for any of the transporting vehicles of embodiments herein.

The inventory is stored in the plurality of storage locations 10, 11, 12. The method comprises any one or more out of the following actions described below, which actions may be taken in any suitable order.

### Action 301

The method may comprise receiving, from the monitoring unit 70, an instruction indicating how the transporting vehicle 30, 31, 32 shall measure inventory in the work site 1, e.g., as transmitted in action 202. Any one or more out of at least one first measurement result of the inventory and at least one second measurement, e.g. as discussed in above action 203, of the inventory is/are performed by the first transporting vehicle 30 based on the received instruction.

### Action 302

The method may comprise obtaining the at least part of the inventory to transport to, from, and/or between the plurality of storage locations 10, 11, 12. This may be performed by gathering inventory from the at least one import location 2 or by retrieving inventory from any one or more out of the plurality of storage locations 10, 11, 12, e.g. by use of any of the construction equipment 50, 51 helping to load the first transporting vehicle 30.

### Action 303

The method may comprise performing, e.g., measuring and/or estimating, at least one first measurement to obtain at least one first measurement result. The at least one first measurement result is indicative of at least part of the inventory 20, 21, 22 transported by the transporting vehicle 30, 31, 32, to, from, and/or between the plurality of storage locations 10, 11, 12 in the work site 1, e.g., as in action 203 above.

### Action 304

The method may comprise transmitting to the monitoring unit 70, the at least one first measurement result.

### Action 305

The method may comprise performing, e.g., measuring and/or estimating, at least one second measurement of the inventory to obtain at least one second measurement result. The at least one second measurement may comprise at least one volume measurement and/or at least one shape measurement of at least one of the plurality of storage locations 10, 11, 12, e.g., as in action 203 above.

### Action 306

The method may comprise transmitting to the monitoring unit 70, the at least one second measurement result.

In some embodiments, the at least one first measurement and the at least one second measurement of the inventory, e.g. as in action 305 and 303 above, are performed concurrently when the transporting vehicle 30, 31, 32 is transporting the at least part of the inventory 20, 21, 22 to, from, and/or between the plurality of storage locations 10, 11, 12 in the work site 1.

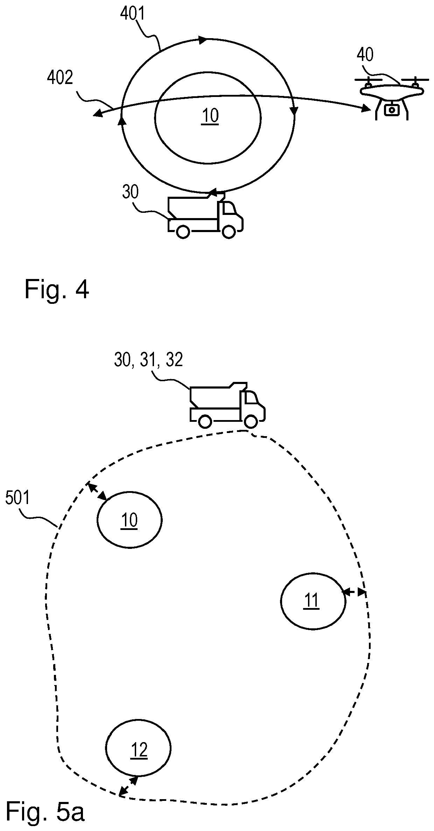

**Fig. 4** illustrates an example scenario of how a storage location in the plurality of storage locations 10, 11, 12 may be measured by the at least one transporting vehicle 30, 31, 32 and the at least one aerial vehicle 40, 41 for improved accuracy of the measurements. In the example scenario, the first transporting vehicle 30 may or may not transport at least part of the inventory in the work site 1. In the example scenario, the first transporting vehicle 30 may measure the first storage location 10 using its respective at least one second sensor, e.g. any suitable camera, Lidar sensor(s), Radar sensor(s), etc. The first transporting vehicle 30 may measure the first storage location 10 when driving to the first storage location 10 and/or may measure the first storage location 10 from positions of a **first driving path 401,** e.g. while driving around the first storage location 10 on the first driving path 401. In this way, the first transporting vehicle 30 may obtain one or more measurement results of the first storage location 10, which may be transmitted to the monitoring unit 70, e.g., as part of the at least one second measurement result of action 203. The monitoring unit 70 may use the one or more measurement results to estimate the amount of inventory in the work site 1, e.g. by at least partially estimating the amount of inventory in the first storage location 10, e.g. as in action 204 above. For improved accuracy when estimating the amount of inventory in the work site 1, in particular when estimating the inventory in the first storage location 10, multiple measurements from different vehicles may be used and from different angles, sides, perspective, etc. For example, the first aerial vehicle 40 may scan the first storage location 10 from at least partially above the first storage location 10. The first storage location 10 may be measured from positions of a **first flying path 402,** e.g. while flying above and/or around the first storage location 10. In the example scenario of Fig. 4, a circumference and height of a storage area of the first storage location 10 may be estimated and/or a topology around the first storage location 10 for ground plane estimation. The first storage location 10 may be cone shaped, and in these embodiments the volume of the first storage location 10 may be estimated by a geometric formula for a cone, i.e. volume=(π/3)r²h wherein r is an estimated radius of the first storage location 10 and h is an estimated height of the first storage location 10.

**Fig. 5a****-c** illustrates example scenarios of how the at least one transporting vehicle 30, 31, 32 may be configured to measure at least part of the inventory in the work site 1, e.g. as indicated by the instruction of actions 202 and/or 301. In the example scenario, the at least one transporting vehicle 30, 31, 32 may or may not transport at least part of the inventory in the work site 1.

In the example scenario of **Fig. 5a****,** the at least one transporting vehicle 30, 31, 32 is configured to at least partially drive along a **first route 501,** e.g. on a subset of paths of the set of paths 60. The first route 501 is arranged such that the at least one transporting vehicle 30, 31, 32 drives past the first storage location 10, the second storage location 11, and the third storage location 12 when driving on the first route 501. When driving past any one of the storage locations 10, 11, 12, the at least one transporting vehicle 30, 31, 32 may measure the respective storage location by the use of a respective at least one second sensor of the at least one transporting vehicle 30, 31, 32. The respective storage location 10, 11, 12, may be measured when driving past the respective storage location and/or by driving around the respective storage location when encountered in proximity of the first route 501, e.g. below a predetermined threshold. Measurement results of the first storage location 10, the second storage location 11, and the third storage location 12 may be transmitted to the monitoring unit 70, e.g. as part of the at least one second measurement results in actions 203, 306 above.

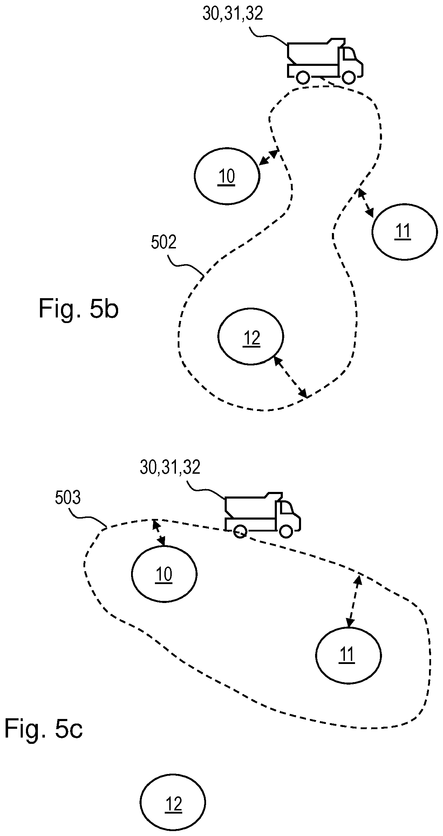

In the example scenario of **Fig. 5b****,** the at least one transporting vehicle 30, 31, 32 is configured to at least partially drive along a **second route 502,** e.g. on a subset of paths of the set of paths 60. The second route 502 is arranged such that the at least one transporting vehicle 30, 31, 32 drives past the first storage location 10, the second storage location 11, and the third storage location 12 when driving along the second route 502. The at least one transporting vehicle 30, 31, 32 may drive past at least partially different sides of the respective storage locations than when driving on the first route 501. For example, the first transporting vehicle 30 may drive and measure the storage locations along the first route 501 and the second transporting vehicle 31 may measure the storage locations along the second route 502 wherein the different transporting vehicles as part of the at least one transporting vehicle 30, 31, 32 may obtain measurement results indicative of different sides of the same storage locations, e.g. as part of action 305 above. Thus the transporting vehicles may collaboratively measure the storage locations using their respective different routes. The respective storage location 10, 11, 12, may be measured when driving past the respective storage location and/or by driving around the respective storage location when encountered in proximity of the second route 502, e.g. below a predetermined threshold. Measurement results of the first storage location 10, the second storage location 11, and the third storage location 12 may be transmitted to the monitoring unit 70, e.g. as part of the at least one second measurement results in actions 203, 306 above.

In the example scenario of **Fig. 5c****,** the at least one transporting vehicle 30, 31, 32 is configured to at least partially drive along a **third route 503,** e.g. on a subset of paths of the set of paths 60. The third route 503 is arranged such that the at least one transporting vehicle 30, 31, 32 drives past the first storage location 10, the second storage location 11, and the third storage location 12 when driving along the third route 503. The at least one transporting vehicle 30, 31, 32 may drive past at least partially different sides of the respective storage locations than when driving on the first route 501 and/or the second route 502.

For example, the first transporting vehicle 30 may drive and measure the storage locations along the first route 501 the second transporting vehicle 31 may measure the storage locations along the second route 502, and the third transporting vehicle 32 may measure the storage locations along the third route 503. The respective storage location 10, 11, 12, may be measured when driving past the respective storage location and/or by driving around the respective storage location when encountered in proximity of the third route 503, e.g. below a predetermined threshold. The transporting vehicles may collaboratively measure the storage locations using their respective different routes. Measurement results of the first storage location 10, the second storage location 11, and the third storage location 12 may be transmitted to the monitoring unit 70, e.g. as part of the at least one second measurement results in actions 203, 306 above.

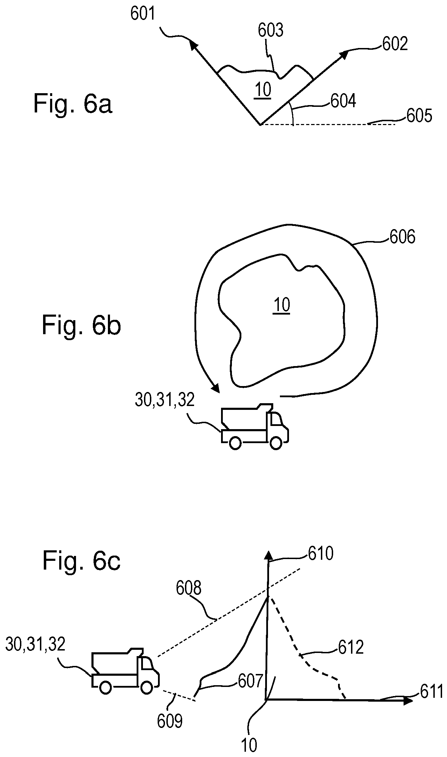

**Figs. 6a****-c** illustrates example scenarios of how to measure and/or estimate inventory of a storage location in the plurality of storage locations. The example scenarios of Figs. 6a-c exemplifies the measuring and estimation of inventory in the first storage location 10, however, corresponding measurements and estimations apply for any one or more out of the storage locations in the plurality of storage locations 10, 11 ,12.

**Fig. 6a** illustrate example scenarios of when inventory in a storage location is stored on a slope. The at least one transporting vehicle 30, 31, 32 may measure a **contour 603,** e.g. a shape, of the inventory in the first storage location 10, e.g. a pile contour. The at least one transporting vehicle 30, 31, 32 may further estimate a reference coordinate system, such as a cartesian coordinate system with **y reference axis 601** and **x reference axis 602.** The at least one transporting vehicle 30, 31, 32 may further estimate an **angle 604** to a **ground plane 605.** Based on the angle 604, it is possible to rotate the contour 603 in the reference coordinate system to align with the ground plane 605, wherein volume may be estimated using standard volume geometric formulas. In some embodiments, it may be possible to use image processing to adapt for a topography of the work site 1, e.g., when performing any one or more out of actions 204, 603-604, or in any estimating/measuring action of embodiments herein. The topography may define how the work site 1 is shaped, e.g., with regards to differing elevations and/or slope angles in the floor/ground and/or size references in the work site 1. Thus, using image processing it may be possible to further improve volume estimation when using image processing adapting for topography, e.g., by using size references of the work site 1 and/or by using known elevations and/or slope angles in the work site 1 floor/ground. The topography may be stored as a file, e.g., image file, e.g., obtained by the at least one transporting vehicle 30, 31, 32 from a server and/or may be stored in the at least one transporting vehicle 30, 31, 32, in the monitoring unit 70, and or in the control unit 80.

**Fig. 6b** illustrate an example scenarios when the at least one transporting vehicle 30, 31, 32 measures the first storage location 10. In this example scenario, the at least one transporting vehicle may drive around the first storage location 10 in the **trajectory 606** to estimate a circumference and/or radius of the first storage location 10. This may be achieved by using a position of the at least one transporting vehicle 30, 31, 32, e.g., as calculated using a Global Navigation Satellite System (GNSS) such as Global Positioning System (GPS) and other means of localization, topology matching of the circumference, and matching of overlapping profiles, e.g. using the at least one second sensor of the at least one transporting vehicle 30, 31, 32. In this way it is possible to measure a ground topography around the first storage location 10. When driving around the first storage location 10, the at least one transporting vehicle 30, 31, 32 may measure partial contours for slices of the first storage location 10, later combined for a complete estimation.

**Fig.** 6c illustrate an example scenario when the at least one transporting vehicle 30, 31, 32 measures the first storage location 10. In this example scenario, a **contour 607** is measured by the at least one transporting vehicle 30, 31, 32, of the first storage location 10. The contour may be as measured in Fig. 6a and/or in Fig. 6b. The contour 607 is measured by a field of view of the at least one transporting vehicle 30, 31, 32 and is defined by what is detectable by the at least one second sensor of the at least one transporting vehicle 30, 31, 32, in this case bounded by a **top part 608** and a **bottom part 609.** The contour is estimated in a cartesian coordinate system with a **y axis 610** and an **x axis 611.** As the at least one transporting vehicle 30, 31, 32 may not see a complete part of the first storage location 10, the contour 607 may be mirrored in the coordinate system to assume to have a similar **corresponding contour 612** on the other corresponding side. In this way, a full view of the first storage location 10 may be estimated using the contours 608, 612 and thereby the volume of the first storage location 10 may be estimated using any suitable volume technique or calculation. The example scenarios of Figs. 6a-c may be performed in any suitable combination.

### Further embodiments and variations

Embodiments herein may be used, e.g., by the monitoring unit 70, to trigger one or more operations in the work site 1, e.g., based on the estimated amount of inventory in the work site 1.

For example, when it is determined that the estimation is incorrect, it may be needed to reduce and/or stop production in the work site 1 as inventory may be lying around in unknown places.

As another example, when it is determined that the estimation of inventory is too high, e.g., above a predefined threshold, in at least one storage location out of the plurality of storage locations 10, 11, 12 and/or in total in the work site 1, the at least one transporting vehicle 30, 31, 32 may be instructed to perform any one or more out of:
- slow down its respective operation, e.g., by reducing max and/or average allowed speed,
- to stop,
- route to another storage location or work site
- performing an alternative transport mission to mitigate that an estimated inventory at a storage location in the plurality of storage locations 10, 11, 12 within the work site 1 drops below a predetermined threshold, and
- to perform other operations in the work site 1.

Too high estimation of amount of inventory may be e.g., higher than a predetermined threshold for a maximum intermediate storage in the work site 1 and/or in the plurality of storage locations 10, 11, 12.

As another example, when it is determined that the estimation is too low, the at least one transporting vehicle 30, 31, 32 may be instructed to perform any one or more out of:
- speed up its respective operation, e.g., by reducing max and/or average allowed speed,
- refrain from performing other operations in the work site 1.

A too low estimation of amount of inventory may be, e.g., lower than a predetermined threshold.

A too low estimation may further trigger the monitoring unit 70 to:
- trigger an instruction to transporting vehicles present in remote locations such as other work sites to be routed to the work site 1 to assist transporting operations in the work site 1, e.g. perform similar or same operations as the at least one transporting vehicle 30, 31, 32.

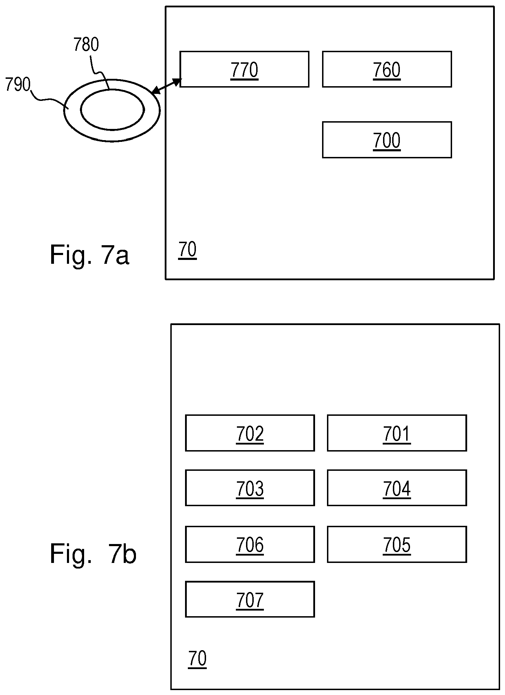

The monitoring unit 70 may be configured to perform any one or more of the above actions 201-207 and/or any other suitable example or embodiment herein. The monitoring unit 70 may for example comprise an arrangement depicted in **Figs. 7a and 7b****.**

The monitoring unit 70 may comprise an input and output interface 700 configured to communicate with any necessary components and/or entities of embodiments herein. The input and output interface 700 may comprise a wireless and/or wired receiver (not shown) and a wireless and/or wired transmitter (not shown). The monitoring unit 70 may be arranged in any suitable location. The monitoring unit 70 may use the input and output interface 700 to communicate with sensors, e.g., the at least one first sensor and/or the at least one second sensor, actuators, subsystems, and interfaces in the at least one transporting vehicle 30, 31, 32, e.g., by using any one or more out of: a Controller Area Network (CAN), ethernet cables, Wi-Fi, Bluetooth, and/or other network interfaces.

The monitoring unit 70 may be configured to, e.g. by means of an **obtaining unit 701** comprised in the monitoring unit 70, obtain an initial amount of inventory in the work site 1. The monitoring unit 70 may be configured to, e.g. by means of a **transmitting unit 702** comprised in the monitoring unit 70, transmit to the at least one transporting vehicle 30, 31, 32, an instruction indicating how the at least one transporting vehicle 30, 31, 32 shall measure inventory in the work site 1.

The monitoring unit 70 may be configured to, e.g. by means of a **receiving unit 703** comprised in the monitoring unit 70, receive the at least one first measurement result of the inventory from at the least one transporting vehicle 30, 31, 32, and optionally being to receive the at least one second measurement result from the at least one transporting vehicle 30, 31, 32, and/or the at least one aerial vehicle 40, 41.

The monitoring unit 70 may be configured to, e.g. by means of an **estimating unit 704** comprised in the monitoring unit 70, estimate an amount of the inventory in the work site 1 based on the at least one first measurement result and optionally based on the at least one second measurement result and/or the obtained initial amount of the inventory.

The monitoring unit 70 may be configured to, e.g. by means of a **verifying unit 705** comprised in the monitoring unit 70, verify the estimated amount of the inventory by comparing the estimated amount of the inventory to at least one expected amount and/or by comparing the at least one first measurement result with at least one control measurement result, e.g. the at least one second measurement result.

The monitoring unit 70 may be configured to, e.g. by means of a **triggering unit 706** comprised in the monitoring unit 70, trigger an alert, e.g. as in action 206.

The monitoring unit 70 may be configured to, e.g. by means of a **training unit 707** comprised in the monitoring unit 70, train a machine learning model to predict the estimated amount of the inventory using the at least one first measurement result of the inventory, the estimated amount of the inventory, and using the knowledge of whether or not the estimated amount of the inventory was correctly verified. The machine learning model may further be used for predicting future estimations of the amount of the inventory and/or for verifying future estimations of the amount of the inventory.

The embodiments herein may be implemented through a processor or one or more processors, such as the processor 760 of a processing circuitry in the monitoring unit 70 depicted in Fig. 7a, together with computer program code for performing the functions and actions of the embodiments herein. The program code mentioned above may also be provided as a computer program medium, for instance in the form of a data computer readable medium carrying computer program code for performing the embodiments herein when being loaded into the monitoring unit 70. One such computer readable medium may be in the form of a memory stick. The computer program code may furthermore be provided as pure program code on a server and downloaded to the monitoring unit 70.

The monitoring unit 70 may further comprise a memory 770 comprising one or more memory units. The memory 770 comprises instructions executable by the processor in monitoring unit 70. The memory 770 is arranged to be used to store e.g. information, indications, data, configurations, sensor data, measurements, estimations, positioning information, routes, and applications to perform the methods herein when being executed in the monitoring unit 70.

In some embodiments, a computer program 780 comprises instructions, which when executed by a computer, e.g. the at least one processor 760, cause the at least one processor of the monitoring unit 70 to perform the actions 201-207 above.

In some embodiments, a computer-readable storage medium 790 comprises the respective computer program 780. The computer-readable storage medium 790 may comprise program code for performing the steps of any one of actions 201-207 above when said program product is run on a computer, e.g. the at least one processor 760.

Those skilled in the art will appreciate that the units in the monitoring unit 70 described above may refer to a combination of analogue and digital circuits, and/or one or more processors configured with software and/or firmware, e.g. stored in the monitoring unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

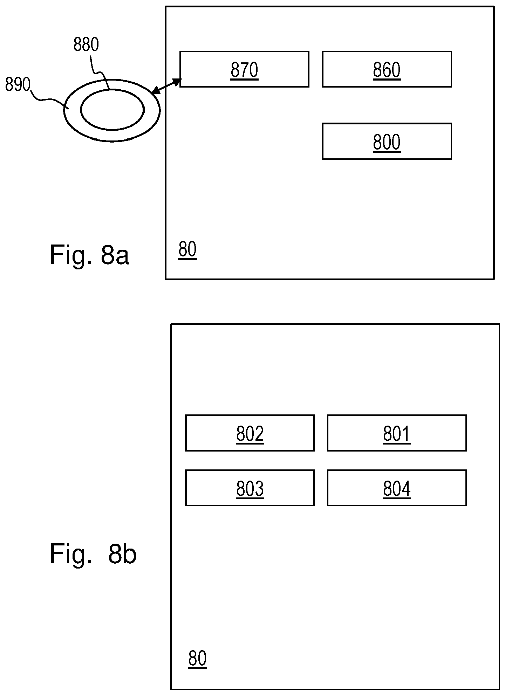

The control unit 80 may be configured to perform any one or more of the above actions 301-306 and/or any other suitable example or embodiment herein. The control unit 80 may for example comprise an arrangement depicted in **Figs. 8a and 8b****.**

The control unit 80 may comprise an input and output interface 800 configured to communicate with any necessary components and/or entities of embodiments herein. The input and output interface 800 may comprise a wireless and/or wired receiver (not shown) and a wireless and/or wired transmitter (not shown). The control unit 80 may be arranged in any suitable location such as e.g., comprised in the at least one transporting vehicle 30, 31, 32, e.g., one control unit 80 per transporting vehicle. The control unit 80 may use the input and output interface 800 to communicate with and/or control, sensors, e.g., the at least one first sensor and/or the at least one second sensor, actuators, subsystems, and interfaces in the at least one transporting vehicle 30, 31, 32, e.g., by using any one or more out of: Controller Area Network (CAN), ethernet cables, Wi-Fi, Bluetooth, and/or other network interfaces.

The control unit 80 may be configured to, e.g. by means of a **receiving unit 801** comprised in the control unit 80, receive, from the monitoring unit 70, an instruction indicating how the transporting vehicle 30, 31, 32 shall measure inventory in the work site 1, e.g., as transmitted in action 202.

The control unit 80 may be configured to, e.g. by means of an **obtaining unit 802** comprised in the control unit 80, obtain the at least part of the inventory to transport to, from, and/or between the plurality of storage locations 10, 11, 12.

The control unit 80 may be configured to, e.g. by means of a **measuring unit 803** comprised in the control unit 80, measure at least one first measurement to obtain at least one first measurement result.

The control unit 80 may be configured to, e.g. by means of a **transmitting unit 804** comprised in the control unit 80, transmit to the monitoring unit 70, the at least one first measurement result.

The control unit 80 may be configured to, e.g. by means of the **measuring unit 803** comprised in the control unit 80, measure at least one second measurement result.

The control unit 80 may be configured to, e.g. by means of the **transmitting unit 804** comprised in the control unit 80, transmit to the monitoring unit 70, the at least one second measurement result.

The embodiments herein may be implemented through a processor or one or more processors, such as the processor 860 of a processing circuitry in the control unit 80 depicted in Fig. 8a, together with computer program code for performing the functions and actions of the embodiments herein. The program code mentioned above may also be provided as a computer program medium, for instance in the form of a data computer readable medium carrying computer program code for performing the embodiments herein when being loaded into the control unit 80. One such computer readable medium may be in the form of a memory stick. The computer program code may furthermore be provided as pure program code on a server and downloaded to the control unit 80.

The control unit 80 may further comprise a memory 870 comprising one or more memory units. The memory 870 comprises instructions executable by the processor in control unit 80. The memory 870 is arranged to be used to store e.g. information, indications, data, configurations, sensor data, measurements, estimations, positioning information, routes, and applications to perform the methods herein when being executed in the control unit 80.

In some embodiments, a computer program 880 comprises instructions, which when executed by a computer, e.g. the at least one processor 860, cause the at least one processor of the control unit 80 to perform the actions 301-306 above.

In some embodiments, a computer-readable storage medium 890 comprises the respective computer program 880. The computer-readable storage medium 890 may comprise program code for performing the steps of any one of actions 301-306 above when said program product is run on a computer, e.g. the at least one processor 860.

Those skilled in the art will appreciate that the units in the control unit 80 described above may refer to a combination of analogue and digital circuits, and/or one or more processors configured with software and/or firmware, e.g. stored in the control unit 80, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It is to be understood that the present invention is not limited to the embodiments described above and illustrated in the drawings; rather, the skilled person will recognize that many changes and modifications may be made within the scope of the appended claims.

## Claims

1. A method performed by a monitoring unit (70) for tracking inventory at a work site (1), the inventory being stored in a plurality of storage locations (10, 11, 12), the method comprising:
- receiving (203) at least one first measurement result of the inventory from at least one transporting vehicle (30, 31, 32), which at least one first measurement result is indicative of at least part of the inventory (20, 21, 22) transported to, from, and/or between the plurality of storage locations (10, 11, 12) in the work site (1), said at least one first measurement result being measured by an on-board sensor of the at least one transporting vehicle (30, 31, 32), **characterized in that**:
when the at least one transportation vehicle (30, 31, 32) is at a stand-still or when travelling below a speed threshold, and wherein said at least one first measurement result comprises at least one volume measurement result, and/or at least one weight measurement result, and
- estimating (204) an amount of the inventory based on the received (203) at least one first measurement result, wherein estimating the amount of the inventory comprises estimating a volume, a weight, and/or a density of the inventory.

2. The method according to any one of the preceding claims, wherein receiving (203) the at least one first measurement result comprises receiving a plurality of measurement results measured by the same transporting vehicle of the at least one transporting vehicle (30, 31, 32), which plurality of measurement results are measured for different transports of at least part of the inventory, to, from, and/or between the plurality of storage locations (10, 11, 12) in the work site (1).

3. The method according to any one of the preceding claims, wherein receiving (203) the at least one first measurement result comprises receiving a measurement result for each part of the inventory transported by the at least one transporting vehicle (30, 31, 32), to, from, and/or between the plurality of storage locations (10, 11, 12) in the work site (1).

4. The method according to any one of the preceding claims, wherein estimating (204) the amount of the inventory comprises estimating a volume and/or a density of the inventory, and wherein the at least one first measurement result comprises at least one weight measurement.

5. The method according to any one of the preceding claims, wherein estimating (204) the amount of the inventory comprises estimating a total amount of the inventory in the work site and/or an amount of the inventory in each storage location out of the plurality of storage locations.

6. The method according to any one of the preceding claims, wherein estimating (204) the amount of the inventory comprises predicting a future amount of the inventory.

7. The method according to any one of the preceding claims, further comprising,
- obtaining (201) an initial amount of the inventory in the work site (1), and wherein estimating (204) the amount of the inventory is further based on the obtained initial amount of the inventory.

8. The method according to claim 7 wherein obtaining (201) the initial amount of the inventory comprises any one or more out of:
- obtaining at least one previous measurement of transported at least parts of the inventory to, from, or between the plurality of storage locations(10, 11, 12) in the work site (1), and
- obtaining a previously estimated or determined amount of the inventory in the work site (1).

9. The method according to any one of the preceding claims, wherein receiving (203) the at least one first measurement result of the inventory, further comprises receiving at least one type of the measured at least part of the inventory (20, 21, 22), and/or at least one tag and/or characteristics of the measured at least part of the inventory (20, 21, 22), and
wherein estimating (204) the amount of the inventory further comprises estimating an amount of the at least one type and/or an amount of the at least one tag and/or characteristics of the inventory.

10. The method according to any one of the preceding claims, further comprising:
- receiving (203) at least one second measurement result of the inventory, which at least one second measurement result of the inventory is indicative of at least part of the inventory stored in the at least one of the plurality of storage locations (10, 11, 12), and
wherein estimating (204) the amount of the inventory is further based on the received (203) at least one second measurement result.

11. The method according to claim 10, wherein the at least one second measurement result comprises any one or more out of:
- at least one volume measurement result and/or at least one measured shape of the at least one of the plurality of storage locations (10, 11, 12),
- at least one measurement result measured by at least one aerial vehicle (40, 41), and
- at least one measurement result measured by the at least one transporting vehicle (30, 31, 32).

12. The method according to any one of claims 10-11, wherein the at least one second measurement result is measured by the at least one transporting vehicle (30, 31, 32), when the at least one transporting vehicle (30, 31, 32) is concurrently transporting other parts of the inventory to, from, and/or between the plurality of storage locations (10, 11, 12) in the work site (1).

13. The method according to any one of claims 10-12, wherein the at least one second measurement result comprises at least one measurement result measured by at least one second sensor of the at least one transporting vehicle (30, 31, 32) and/or at least one shape measurement result indicative of a driving path of the at least one transporting vehicle (30, 31, 32) around the at least one of the plurality of storage locations (10, 11, 12).

14. The method according to any one of the preceding claims, wherein receiving (203) the at least one first measurement result comprises receiving at least one registration of at least part of the inventory which has left the work site (1), wherein the at least one registration comprises any one or more out of:
- at least one indication of which transporting vehicle (30, 31, 32) has transported the at least part of the inventory off the work site (1),
- at least one indication of a time when the at least part of the inventory was transported off the work site (1),
- at least one indication of a type, a tag and/or characteristics of the at least part of the inventory transported off the work site (1),
- a latest measurement result indicative of any one or more out of: weight, volume, type, a tag, characteristics, and/or density, of the at least part of the inventory that has been transported off the work site (1) as measured by a transporting vehicle (30, 31, 32),
- a confirmation of any one or more out of: weight, volume, type, tag, characteristics, and/or density, of the at least part of the inventory that has been transported off the work site (1) as confirmed by an external verifying unit and/or user outside the work site (1).

15. The method according to any one of the preceding claims, further comprising
- verifying (205) the estimated amount of the inventory by comparing the estimated amount of the inventory to at least one expected amount and/or by comparing the at least one first measurement result with at least one control measurement result, and
when the estimated amount of the inventory cannot be verified, the method further comprises triggering (206) an alert.

16. The method according to claim 15 wherein verifying (205) the estimated amount of the inventory is based on comparing the estimated amount of the inventory with at least one expected amount of the inventory.

17. The method according to claim 16, wherein verifying (205) the estimated amount of the inventory comprises:
- obtaining at least one previous measurement result of the inventory as measured when transported to, from, or between the plurality of storage locations (10, 11, 12) in the work site (1),
- based on the at least one previous measurement result, predicting a first expected amount of the inventory, and
- comparing the estimated amount of the inventory with the first expected amount of the inventory.

18. The method according to any one of claims 16-17, wherein verifying (205) the estimated amount of the inventory comprises:
- obtaining accumulated measurements of the inventory leaving and entering the work site (1),
- obtaining a previously estimated or determined amount of the inventory in the work site (1),
- predicting a second expected amount of the inventory based on the accumulated measurements and the previously estimated or determined amount of the inventory in the work site (1), and
- comparing the estimated amount of the inventory with the second expected amount of the inventory.

19. The method according to any one of claims 15-18, wherein verifying (205) the estimated amount of the inventory is triggered to be performed by any one or more out of:
- periodically,
- when at least one transporting vehicle (30, 31, 32) finishes a transport of at least part of the inventory, and
- when an amount of the inventory stored at any one or more of the plurality of storage locations (10, 11, 12) is determined to be above a predetermined threshold.

20. The method according to any one of claims 15-19, further comprising,
- training (207) a machine learning model to predict the estimated amount of the inventory using the at least one first measurement result of the inventory, the estimated amount of the inventory, and using the knowledge of whether or not the estimated amount of the inventory was correctly verified, and
- using the trained machine learning model for predicting future estimations of the amount of the inventory and/or for verifying future estimations of the amount of the inventory.

21. The method according to any one of claims 15-20, wherein at least a part of the inventory is tagged with a respective identifier identifying an origin and/or the respective type of the inventory, wherein each transport of the tagged part of the inventory is logged with the respective identifier, wherein receiving (203) the at least one first measurement result indicative of the inventory comprises receiving the respective identifier, and wherein verifying (205) the estimated amount of the inventory comprises verifying whether the respective identifier is consistent with the logged transports of the at least part of the inventory.

22. The method according to any one of the preceding claims, wherein the method further comprises:
- transmitting (202) to at least one transporting vehicle (30, 31, 32), an instruction indicating how the at least one transporting vehicle (30, 31, 32) shall measure inventory in the work site (1) and, wherein the instruction further indicates one or more storage locations of the plurality of storage locations (10, 11, 12) the at least one transporting vehicle (30, 31, 32), shall measure while transporting the at least part of the inventory.

## Patentansprüche

1. Verfahren, das durch eine Überwachungseinheit (70) zum Nachverfolgen von Lagerbestand auf einer Baustelle (1) durchgeführt wird, wobei der Lagerbestand an einer Vielzahl von Lagerorten (10, 11, 12) gelagert ist, das Verfahren umfassend:
- Empfangen (203) von mindestens einem ersten Messergebnis des Lagerbestands von mindestens einem Transportfahrzeug (30, 31, 32), wobei das mindestens eine erste Messergebnis mindestens einen Teil des Lagerbestands (20, 21, 22) angibt, der zu, von und/oder zwischen der Vielzahl von Lagerorten (10, 11, 12) auf der Baustelle (1) transportiert wird, wobei das mindestens eine erste Messergebnis von einem fahrzeugeigenen Sensor des mindestens einen Transportfahrzeugs (30, 31, 32) gemessen wird, **dadurch gekennzeichnet, dass:**
wenn das mindestens eine Transportfahrzeug (30, 31, 32) stillsteht oder wenn es unterhalb einer Geschwindigkeitsschwelle fährt, und wobei das mindestens eine erste Messergebnis mindestens ein Volumenmessergebnis und/oder mindestens ein Gewichtsmessergebnis umfasst, und
- Schätzen (204) einer Menge des Lagerbestands basierend auf dem empfangenen (203) mindestens einen ersten Messergebnis, wobei das Schätzen der Menge des Lagerbestands das Schätzen eines Volumens, eines Gewichts und/oder einer Dichte des Lagerbestands umfasst.

2. Verfahren nach einem der vorstehenden Ansprüche, wobei das Empfangen (203) des mindestens einen ersten Messergebnisses das Empfangen einer Vielzahl von Messergebnissen umfasst, die von demselben Transportfahrzeug des mindestens einen Transportfahrzeugs (30, 31, 32) gemessen werden, wobei die Vielzahl von Messergebnissen für unterschiedliche Transporte von mindestens einem Teil des Lagerbestands zu, von und/oder zwischen der Vielzahl von Lagerorten (10, 11, 12) auf der Baustelle (1) gemessen wird.

3. Verfahren nach einem der vorstehenden Ansprüche, wobei das Empfangen (203) des mindestens einen ersten Messergebnisses das Empfangen eines Messergebnisses für jeden Teil des Lagerbestands umfasst, der von dem mindestens einen Transportfahrzeug (30, 31, 32) zu, von und/oder zwischen der Vielzahl von Lagerorten (10, 11, 12) auf der Baustelle (1) transportiert wird.

4. Verfahren nach einem der vorstehenden Ansprüche, wobei das Schätzen (204) der Menge des Lagerbestands das Schätzen eines Volumens und/oder einer Dichte des Lagerbestands umfasst, und wobei das mindestens eine erste Messergebnis mindestens eine Gewichtsmessung umfasst.

5. Verfahren nach einem der vorstehenden Ansprüche, wobei das Schätzen (204) der Menge des Lagerbestands das Schätzen einer Gesamtmenge des Lagerbestands auf der Baustelle und/oder einer Menge des Lagerbestands in jedem Lagerort aus der Vielzahl von Lagerorten umfasst.

6. Verfahren nach einem der vorstehenden Ansprüche, wobei das Schätzen (204) der Menge des Lagerbestands ein Vorhersagen einer zukünftigen Menge des Lagerbestands umfasst.

7. Verfahren nach einem der vorstehenden Ansprüche, ferner umfassend,
- Erhalten (201) einer Anfangsmenge des Lagerbestands auf der Baustelle (1) und
wobei das Schätzen (204) der Menge des Lagerbestands ferner auf der erhaltenen Anfangsmenge des Lagerbestands basiert.

8. Verfahren nach Anspruch 7, wobei das Erhalten (201) der Anfangsmenge des Lagerbestands ein beliebiges eines oder mehrere aus Folgendem umfasst:
- Erhalten von mindestens einer vorherigen Messung von transportierten mindestens Teilen des Lagerbestands, zu, von oder zwischen der Vielzahl von Lagerorten (10, 11, 12) auf der Baustelle (1), und
- Erhalten einer vorherig geschätzten oder bestimmten Menge des Lagerbestands auf der Baustelle (1).

9. Verfahren nach einem der vorstehenden Ansprüche, wobei das Empfangen (203) des mindestens einen ersten Messergebnisses des Lagerbestands ferner das Empfangen mindestens einer Art des gemessenen mindestens einen Teils des Lagerbestands (20, 21, 22) und/oder mindestens eines Etiketts und/oder von Merkmalen des gemessenen mindestens einen Teils des Lagerbestands (20, 21, 22) umfasst, und
wobei das Schätzen (204) der Menge des Lagerbestands ferner das Schätzen einer Menge der mindestens einen Art und/oder einer Menge des mindestens einen Etiketts und/oder von Eigenschaften des Lagerbestands umfasst.

10. Verfahren nach einem der vorstehenden Ansprüche, ferner umfassend:
- Empfangen (203) von mindestens einem zweiten Messergebnis des Lagerbestands, wobei mindestens eine zweites Messergebnis des Lagerbestands mindestens einen Teil des Lagerbestands angibt, der in dem mindestens einen der Vielzahl von Lagerorten (10, 11, 12) gelagert ist, und
wobei das Schätzen (204) der Menge des Lagerbestands ferner auf dem empfangenen (203) mindestens einen zweiten Messergebnis basiert.

11. Verfahren nach Anspruch 10, wobei das mindestens eine zweite Messergebnis ein beliebiges eines oder mehrere aus Folgendem umfasst:
- mindestens ein Volumenmessergebnis und/oder mindestens eine gemessene Form des mindestens einen der Vielzahl von Lagerorten (10, 11, 12),
- mindestens ein Messergebnis, das durch mindestens ein Luftfahrzeug (40, 41) gemessen wird, und
- mindestens ein Messergebnis, das durch das mindestens eine Transportfahrzeug (30, 31, 32) gemessen wird.

12. Verfahren nach einem der Ansprüche 10 bis 11, wobei das mindestens eine zweite Messergebnis durch das mindestens eine Transportfahrzeug (30, 31, 32) gemessen wird, wenn das mindestens eine Transportfahrzeug (30, 31, 32) gleichzeitig andere Teile des Lagerbestands zu, von und/oder zwischen der Vielzahl von Lagerorten (10, 11, 12) auf der Baustelle (1) transportiert.

13. Verfahren nach einem der Ansprüche 10 bis 12, wobei das mindestens eine zweite Messergebnis mindestens ein Messergebnis, das durch mindestens einen zweiten Sensor des mindestens einen Transportfahrzeugs (30, 31, 32) gemessen wird, und/oder mindestens ein Formmessergebnis umfasst, das einen Fahrweg des mindestens einen Transportfahrzeugs (30, 31, 32) um den mindestens einen der Vielzahl von Lagerorten (10, 11, 12) angibt.

14. Verfahren nach einem der vorstehenden Ansprüche, wobei das Empfangen (203) des mindestens einen ersten Messergebnisses das Empfangen von mindestens einer Registrierung von mindestens einem Teil des Lagerbestands umfasst, der die Baustelle (1) verlassen hat, wobei die mindestens eine Registrierung ein beliebiges eines oder mehrere aus Folgendem umfasst:
- mindestens eine Angabe, welches Transportfahrzeug (30, 31, 32) den mindestens einen Teil des Lagerbestands von der Baustelle (1) abtransportiert hat,
- mindestens eine Angabe eines Zeitpunkts, zu dem mindestens ein Teil des Lagerbestands von der Baustelle (1) abtransportiert wurde,
- mindestens eine Angabe einer Art, eines Etiketts und/oder von Merkmalen des mindestens einen Teils des Lagerbestands, der von der Baustelle (1) abtransportierten wird,
- ein letztes Messergebnis, das
ein beliebiges eines oder mehrere aus Folgendem angibt: Gewicht, Volumen, Art, Etikett, Merkmale und/oder Dichte von dem mindestens einen Teil des Lagerbestands, der von der Baustelle (1) abtransportiert wurde, gemessen durch ein Transportfahrzeug (30, 31, 32),
- eine Bestätigung von einem beliebigen einen oder mehreren aus Folgendem: Gewicht, Volumen, Art, Etikett, Merkmale und/oder Dichte von mindestens einem Teil des Lagerbestands, der von der Baustelle (1) abtransportiert wurde, bestätigt durch eine externe Verifizierungseinheit und/oder einem Benutzer außerhalb der Baustelle (1).

15. Verfahren nach einem der vorstehenden Ansprüche, ferner umfassend
- Verifizieren (205) der geschätzten Menge des Lagerbestands durch Vergleichen der geschätzten Menge des Lagerbestands mit mindestens einer erwarteten Menge und/oder durch Vergleichen des mindestens einen ersten Messergebnisses mit mindestens einem Kontrollmessergebnis, und
wenn die geschätzte Menge des Lagerbestands nicht verifiziert werden kann, das Verfahren ferner ein Auslösen (206) einer Warnung umfasst.

16. Verfahren nach Anspruch 15, wobei das Verifizieren (205) der geschätzten Menge des Lagerbestands auf dem Vergleichen der geschätzten Menge des Lagerbestands mit mindestens einer erwarteten Menge des Lagerbestands basiert.

17. Verfahren nach Anspruch 16, wobei das Verifizieren (205) der geschätzten Menge des Lagerbestands umfasst:
- Erhalten von mindestens einem vorherigen Messergebnis des Lagerbestands, gemessen beim Transport zu, von oder zwischen der Vielzahl von Lagerorten (10, 11, 12) auf der Baustelle (1),
- basierend auf dem mindestens einen vorherigen Messergebnis, Vorhersagen einer ersten erwarteten Menge des Lagerbestands, und
- Vergleichen der geschätzten Menge des Lagerbestands mit der ersten erwarteten Menge des Lagerbestands.

18. Verfahren nach einem der Ansprüche 16 bis 17, wobei das Verifizieren (205) der geschätzten Menge des Lagerbestands umfasst:
- Erhalten akkumulierter Messungen des Lagerbestands, der die Baustelle (1) verlässt und der in dieser aufgenommen wird,
- Erhalten einer vorherig geschätzten oder bestimmten Menge des Lagerbestands auf der Baustelle (1),
- Vorhersagen einer zweiten erwarteten Menge des Lagerbestands basierend auf den akkumulierten Messungen und der vorherig geschätzten oder bestimmten Menge des Lagerbestands auf der Baustelle (1), und
- Vergleichen der geschätzten Menge des Lagerbestands mit der zweiten erwarteten Menge des Lagerbestands.

19. Verfahren nach einem der Ansprüche 15 bis 18, wobei ein Durchführen des Verifizierens (205) der geschätzten Menge des Lagerbestands aus einem beliebigen einen oder mehreren aus Folgendem ausgelöst wird:
- regelmäßig,
- wenn mindestens ein Transportfahrzeug (30, 31, 32) einen Transport von mindestens einem Teil des Lagerbestands beendet, und
- wenn bestimmt wird, dass eine Menge des Lagerbestands, der an einem beliebigen einen oder mehreren der Vielzahl von Lagerorten (10, 11, 12) gelagerten wird, über einer zuvor bestimmten Schwelle liegt.

20. Verfahren nach einem der Ansprüche 15 bis 19, ferner umfassend,
- Trainieren (207) eines maschinellen Lernmodells, um die geschätzte Menge des Lagerbestands unter Verwendung des mindestens einen Messergebnisses der Lagerbestands vorherzusagen, und Verwenden des Wissens darüber, ob die geschätzte Menge des Lagerbestands korrekt verifiziert wurde oder nicht, und
- Verwenden des trainierten maschinellen Lernmodells zum Vorhersagen zukünftiger Schätzungen der Menge des Lagerbestands und/oder zum Verifizieren zukünftiger Schätzungen der Menge des Lagerbestands.

21. Verfahren nach einem der Ansprüche 15 bis 20, wobei mindestens ein Teil des Lagerbestands mit einer entsprechenden Kennung etikettiert ist, die einen Ursprung und/oder die jeweilige Art des Lagerbestands identifiziert, wobei jeder Transport des etikettierten Teils des Lagerbestands mit der entsprechenden Kennung protokolliert wird, wobei das Empfangen (203) des mindestens einen ersten Messergebnisses, das den Lagerbestand angibt, das Empfangen der entsprechenden Kennung umfasst, und wobei das Verifizieren (205) der geschätzten Menge des Lagerbestands das Verifizieren umfasst, ob die entsprechende Kennung mit den protokollierten Transporten des mindestens einen Teils des Lagerbestands übereinstimmt.

22. Verfahren nach einem der vorstehenden Ansprüche, wobei das Verfahren ferner umfasst:
- Übertragen (202), an mindestens ein Transportfahrzeug (30, 31, 32), einer Anweisung, die angibt, wie das mindestens eine Transportfahrzeug (30, 31, 32) den Lagerbestand auf der Baustelle (1) messen soll, und wobei die Anweisung ferner einen oder mehrere Lagerorte der Vielzahl von Lagerorten (10, 11, 12) angibt, die das mindestens eine Transportfahrzeug (30, 31, 32) während des Transportierens des mindestens einen Teils des Lagerbestands messen soll.

## Revendications

1. Procédé exécuté par une unité de surveillance (70) pour suivre un stock sur un site d'exploitation (1), le stock étant stocké dans une pluralité d'emplacements de stockage (10, 11, 12), le procédé comprenant :
- la réception (203) d'au moins un premier résultat de mesure du stock à partir d'au moins un véhicule de transport (30, 31, 32), lequel au moins un premier résultat de mesure indique au moins une partie du stock (20, 21, 22) transporté vers, depuis et/ou entre la pluralité d'emplacements de stockage (10, 11, 12) sur le site d'exploitation (1), ledit au moins un premier résultat de mesure étant mesuré par un capteur embarqué de l'au moins un véhicule de transport (30, 31, 32), **caractérisé en ce que** :
lorsque l'au moins un véhicule de transport (30, 31, 32) est à l'arrêt ou lorsqu'il se déplace en dessous d'un seuil de vitesse, et dans lequel ledit au moins un premier résultat de mesure comprend au moins un résultat de mesure de volume, et/ou au moins un résultat de mesure de poids, et
- l'estimation (204) d'une quantité du stock sur la base de l'au moins un premier résultat de mesure reçu (203), dans lequel l'estimation de la quantité du stock comprend l'estimation d'un volume, d'un poids et/ou d'une densité du stock.

2. Procédé selon l'une quelconque des revendications précédentes, dans lequel la réception (203) de l'au moins un premier résultat de mesure comprend la réception d'une pluralité de résultats de mesure mesurés par le même véhicule de transport parmi l'au moins un véhicule de transport (30, 31, 32), laquelle pluralité de résultats de mesure sont mesurés pour différents transports d'au moins une partie du stock, vers, depuis et/ou entre la pluralité d'emplacements de stockage (10, 11, 12) sur le site d'exploitation (1).

3. Procédé selon l'une quelconque des revendications précédentes, dans lequel la réception (203) de l'au moins un premier résultat de mesure comprend la réception d'un résultat de mesure pour chaque partie du stock transporté par l'au moins un véhicule de transport (30, 31, 32), vers, depuis et/ou entre la pluralité d'emplacements de stockage (10, 11, 12) sur le site d'exploitation (1).

4. Procédé selon l'une quelconque des revendications précédentes, dans lequel l'estimation (204) de la quantité du stock comprend l'estimation d'un volume et/ou d'une densité du stock, et dans lequel l'au moins un premier résultat de mesure comprend au moins une mesure de poids.

5. Procédé selon l'une quelconque des revendications précédentes, dans lequel l'estimation (204) de la quantité du stock comprend l'estimation d'une quantité totale du stock sur le site d'exploitation et/ou d'une quantité du stock dans chaque emplacement de stockage parmi la pluralité d'emplacements de stockage.

6. Procédé selon l'une quelconque des revendications précédentes, dans lequel l'estimation (204) de la quantité du stock comprend la prédiction d'une quantité future du stock.

7. Procédé selon l'une quelconque des revendications précédentes, comprenant en outre :
- l'obtention (201) d'une quantité initiale du stock sur le site d'exploitation (1), et
dans lequel l'estimation (204) de la quantité du stock est en outre basée sur la quantité initiale obtenue du stock.

8. Procédé selon la revendication 7, dans lequel l'obtention (201) de la quantité initiale du stock comprend l'un quelconque ou plusieurs parmi :
- l'obtention d'au moins d'une mesure précédente d'au moins des parties du stock transportées vers, depuis ou entre la pluralité d'emplacements de stockage (10, 11, 12) sur le site d'exploitation (1), et
- l'obtention d'une quantité précédemment estimée ou déterminée du stock sur le site d'exploitation (1).

9. Procédé selon l'une quelconque des revendications précédentes, dans lequel la réception (203) de l'au moins un premier résultat de mesure du stock comprend en outre la réception d'au moins un type de l'au moins une partie mesurée du stock (20, 21, 22), et/ou d'au moins une étiquette et/ou de caractéristiques de l'au moins une partie mesurée du stock (20, 21, 22), et
dans lequel l'estimation (204) de la quantité du stock comprend en outre l'estimation d'une quantité de l'au moins un type et/ou d'une quantité de l'au moins une étiquette et/ou de caractéristiques du stock.

10. Procédé selon l'une quelconque des revendications précédentes, comprenant en outre :
- la réception (203) d'au moins un second résultat de mesure du stock, lequel au moins un second résultat de mesure du stock indiquant au moins une partie du stock stocké dans l'au moins un parmi la pluralité d'emplacements de stockage (10, 11, 12), et
dans lequel l'estimation (204) de la quantité du stock est en outre basée sur l'au moins un second résultat de mesure reçu (203).

11. Procédé selon la revendication 10, dans lequel l'au moins un second résultat de mesure comprend l'un quelconque ou plusieurs parmi :
- au moins un résultat de mesure de volume et/ou au moins une forme mesurée de l'au moins un parmi la pluralité d'emplacements de stockage (10, 11, 12),
- au moins un résultat de mesure mesuré par au moins un véhicule aérien (40, 41), et
- au moins un résultat de mesure mesuré par l'au moins un véhicule de transport (30, 31, 32).

12. Procédé selon l'une quelconque des revendications 10 à 11, dans lequel l'au moins un second résultat de mesure est mesuré par l'au moins un véhicule de transport (30, 31, 32), lorsque l'au moins un véhicule de transport (30, 31, 32) transporte simultanément d'autres parties du stock vers, depuis et/ou entre la pluralité d'emplacements de stockage (10, 11, 12) sur le site d'exploitation (1).

13. Procédé selon l'une quelconque des revendications 10 à 12, dans lequel l'au moins un second résultat de mesure comprend au moins un résultat de mesure mesuré par au moins un second capteur de l'au moins un véhicule de transport (30, 31, 32) et/ou au moins un résultat de mesure de forme indiquant un trajet de conduite de l'au moins véhicule de transport (30, 31, 32) autour de l'au moins un parmi la pluralité d'emplacements de stockage (10, 11, 12).

14. Procédé selon l'une quelconque des revendications précédentes, dans lequel la réception (203) de l'au moins un premier résultat de mesure comprend la réception d'au moins un enregistrement d'au moins une partie du stock qui a quitté le site d'exploitation (1), dans lequel l'au moins un enregistrement comprend l'un quelconque ou plusieurs parmi :
- au moins une indication du véhicule de transport (30, 31, 32) qui a transporté l'au moins une partie du stock hors du site d'exploitation (1),
- au moins une indication d'un moment où l'au moins une partie du stock a été transportée hors du site d'exploitation (1),
- au moins une indication d'un type, d'une étiquette et/ou de caractéristiques de l'au moins une partie du stock transportée hors du site d'exploitation (1),
- un dernier résultat de mesure indiquant l'un quelconque ou plusieurs parmi : le poids, le volume, le type, l'étiquette, les caractéristiques, et/ou la densité, de l'au moins une partie du stock qui a été transportée hors du site d'exploitation (1) tel que mesuré par un véhicule de transport (30, 31, 32),
- une confirmation de l'un quelconque ou plusieurs parmi : le poids, le volume, le type, l'étiquette, les caractéristiques et/ou la densité, de l'au moins une partie du stock qui a été transportée hors du site d'exploitation (1), tel que confirmé par une unité de vérification externe et/ou un utilisateur en dehors du site d'exploitation (1).

15. Procédé selon l'une quelconque des revendications précédentes, comprenant en outre :
- la vérification (205) de la quantité estimée du stock en comparant la quantité estimée du stock à au moins une quantité attendue et/ou en comparant l'au moins un premier résultat de mesure avec au moins un résultat de mesure de contrôle, et
lorsque la quantité estimée du stock ne peut pas être vérifiée, le procédé comprend en outre le déclenchement (206) d'une alerte.

16. Procédé selon la revendication 15, dans lequel la vérification (205) de la quantité estimée du stock est basée sur la comparaison de la quantité estimée du stock avec au moins une quantité attendue du stock.

17. Procédé selon la revendication 16, dans lequel la vérification (205) de la quantité estimée du stock comprend :
- l'obtention d'au moins un résultat de mesure précédent du stock tel que mesuré lors du transport vers, depuis ou entre la pluralité d'emplacements de stockage (10, 11, 12) sur le site d'exploitation (1),
- sur la base de l'au moins un résultat de mesure précédent, la prédiction d'une première quantité attendue du stock, et
- la comparaison de la quantité estimée du stock avec la première quantité attendue du stock.

18. Procédé selon l'une quelconque des revendications 16 et 17, dans lequel la vérification (205) de la quantité estimée du stock comprend :
- l'obtention de mesures cumulées du stock sortant et entrant sur le site d'exploitation (1),
- l'obtention d'une quantité précédemment estimée ou déterminée du stock sur le
site d'exploitation (1),
- la prédiction d'une seconde quantité attendue du stock sur la base des mesures cumulées et de la quantité précédemment estimée ou déterminée du stock sur le site d'exploitation (1), et
- la comparaison de la quantité estimée du stock avec la seconde quantité attendue du stock.

19. Procédé selon l'une quelconque des revendications 15 à 18, dans lequel la vérification (205) de la quantité estimée du stock est déclenchée pour être exécutée par l'un quelconque ou plusieurs parmi :
- périodiquement,
- lorsqu'au moins un véhicule de transport (30, 31, 32) termine un transport d'au moins une partie du stock, et
- lorsqu'une quantité du stock stockée au niveau d'un quelconque ou plusieurs de la pluralité d'emplacements de stockage (10, 11, 12) est déterminée comme étant supérieure à un seuil prédéterminé.

20. Procédé selon l'une quelconque des revendications 15 à 19, comprenant en outre :
- l'entraînement (207) d'un modèle d'apprentissage automatique pour prédire la quantité estimée du stock à l'aide de l'au moins un premier résultat de mesure du stock, de la quantité estimée du stock, et à l'aide de la connaissance du fait que la quantité estimée du stock a été ou non correctement vérifiée, et
- l'utilisation du modèle d'apprentissage automatique entraîné pour prédire des estimations futures de la quantité du stock et/ou pour vérifier des estimations futures de la quantité du stock.

21. Procédé selon l'une quelconque des revendications 15 à 20, dans lequel au moins une partie du stock est étiquetée avec un identificateur respectif identifiant une origine et/ou le type respectif du stock, dans lequel chaque transport de la partie étiquetée du stock est enregistré avec l'identificateur respectif, dans lequel la réception (203) de l'au moins un premier résultat de mesure indiquant le stock comprend la réception de l'identificateur respectif, et dans lequel la vérification (205) de la quantité estimée du stock comprend la vérification du fait de savoir si l'identificateur respectif est cohérent avec les transports enregistrés de l'au moins une partie du stock.

22. Procédé selon l'une quelconque des revendications précédentes, dans lequel le procédé comprend en outre :
- la transmission (202) à au moins un véhicule de transport (30, 31, 32), d'une instruction indiquant comment l'au moins un véhicule de transport (30, 31, 32) doit mesurer le stock sur le site d'exploitation (1) et, dans lequel l'instruction indique en outre un ou plusieurs emplacements de stockage parmi la pluralité d'emplacements de stockage (10, 11, 12) que l'au moins un véhicule de transport (30, 31, 32) doit mesurer pendant le transport de l'au moins une partie du stock.
